(19) Europäisches Patentamt
European Patent Office
Office européen des brevets

(11) **EP 1 184 059 B1**

(12) **EUROPEAN PATENT SPECIFICATION**

(45) Date of publication and mention
of the grant of the patent:
**26.05.2010  Bulletin 2010/21**

(51) Int Cl.:
***A63F 13/04*** *(2006.01)*   ***A63F 13/08*** *(2006.01)*
***A63B 69/00*** *(2006.01)*

(21) Application number: **01118809.1**

(22) Date of filing: **09.08.2001**

(54) **Game machine**

Spielvorrichtung

Appareil de jeu

(84) Designated Contracting States:
**ES GB IT**

(30) Priority:  **11.08.2000  JP 2000245252**

(43) Date of publication of application:
**06.03.2002  Bulletin 2002/10**

(73) Proprietor: **Konami Digital Entertainment Co., Ltd.**
**Tokyo 107-8324 (JP)**

(72) Inventors:
- **Okita, Katsunori**
  **Minato-ku,**
  **Tokyo (JP)**
- **Kubota, Kazutaka**
  **Minato-ku,**
  **Tokyo (JP)**
- **Takeda, Toru**
  **Minato-ku,**
  **Tokyo (JP)**
- **Harano, Yuuki**
  **Minato-ku,**
  **Tokyo (JP)**
- **Tsuji, Yutaka**
  **Minato-ku,**
  **Tokyo (JP)**
- **Konishi, Kazuma**
  **Minato-ku,**
  **Tokyo (JP)**

(74) Representative: **Müller-Boré & Partner**
**Patentanwälte**
**Grafinger Strasse 2**
**81671 München (DE)**

(56) References cited:
WO-A-00/44456      DE-U- 29 606 848
DE-U- 29 617 403    DE-U- 29 617 783
DE-U- 29 815 284    FR-A- 2 682 608
US-A- 5 035 432

- "Events at 2001 AOU Show" [ONLINE], 13 March 2001 (2001-03-13), pages 1-3, XP002180348 Retrieved from the Internet: <URL: www.gameplayers.com.hk/videogames/arcade2001/special/events/20010313/content03.html> [retrieved on 2001-10-16]

EP 1 184 059 B1

## Description

The present invention relates to a game machine in which a game player lets a flying element such as a ball fly, for example, in a soccer game, a target hitting game by a ball, and other game.

## BACKGROUND OF THE INVENTION AND RELATED ART STATEMENT

A soccer game machine is known as one of the aforementioned games, and various types of soccer game machines have been developed. For example, Japanese Unexamined Utility Model Publication No. 6-66736 discloses a soccer game machine in which a ball flies in a direction in which a game player hits the ball. This game machine is constructed such that a ball 13 flies in a hitting direction and is kicked into a goal 120 provided below a target 130 after hitting the target 130 or passing below it.

However, the above various proposed game machines had a problem of being not interesting enough because a position where the ball is kicked in (target position) is constant. Other game machines have also been proposed in Japanese Unexamined Patent Publications Nos. 10-035280, 10-328690 and the like. However, the target position is also constant in these machines.

FR-A-2 682 608 discloses a device for determining the position of impact of a golf ball, according to which at four edges of a panel towards which the golf ball has to be directed, piezoelectric microphones are arranged to determine the distance and speed of the flight of the golf ball.

DE 296 06 848 U discloses a simulator for ball games like golf, tennis or soccer, comprising a wall on which the ball is to be shot, and at least two line cameras constituting a measuring plane by being arranged such that their rays are intersecting.

US-A-5 035 432 discloses a golf game comprising a base which is formed as a ramp covered with a carpet to simulate the green of a golf course. A ball is tethered by means of cord to the control stick of a joystick controller. A "pull-to-close" switch is incorporated in the cord so that data on the position of the control stick when the cord is taut can be fed to a computer in order to calculate the trajectory and distance of a drive.

In view of the problem residing in the prior art, an object of the present invention is to provide a game machine capable of providing a more interesting game by enabling a position aimed at with a flying element such as a ball to vary.

In order to achieve the aforementioned object, according to the present invention, a game machine comprises: a display means having a display screen on which a target is to be displayed; a flying element to be flown toward the display screen by an motion of a game player; a flying element receiver provided in front of the display screen such that the display screen can be seen through said flying element receiver; a detecting means for detecting a moving state of the flying element flown by the game player; and an evaluating means for evaluating a result relating to the motion of the game player based on a detection result of the detecting means; wherein a linear sensor is provided comprising a plurality of optical sensors arranged at specified intervals in height direction, and the detecting means includes a two-dimensional sensor for optically detecting a height position and a lateral position of the flying element with respect to the display screen, wherein the two-dimensional sensor includes a plurality of optical sensors arranged in height direction while being spaced apart at specified intervals and a plurality of optical sensors arranged in lateral direction while being spaced apart at specified intervals, and a flying element passage timing measuring means to detect the timings when the flying element has its position first detected by the linear sensor and its position detected by the two-dimensional sensor.

These and other objects, features and advantages of the present invention will become more apparent upon a reading of the following detailed description and accompanying drawings.

## BRIEF DESCRIPTION OF THE DRAWINGS

FIG. 1 is a perspective view showing an outer configuration of a soccer game machine according to one embodiment of the present invention when obliquely viewed from front right,

FIG. 2 is a left side view of the soccer game machine of FIG. 1,

FIG. 3 is a block diagram showing the construction of a control unit built in a display device of the soccer game machine of FIG. 1,

FIG. 4 is a block diagram showing the construction of a CPU provided in the control unit of FIG. 3,

FIG. 5 is a chart showing a detecting state of a two-dimensional sensor provided in the soccer game machine of FIG. 1,

FIGS. 6A and 6B are diagrams showing how a speed of a ball is calculated,

FIG. 7 is a flow chart showing game contents of the soccer game machine of FIG. 1,

FIG. 8 is a flow chart implemented in the case that a real-play mode is selected in the soccer game machine of FIG. 1,

FIG. 9 is a diagram showing an example of the display image when the real-play mode is executed in the soccer game machine of FIG. 1,

FIG. 10 is a diagram showing another example of the display image when the real-play mode is executed in the soccer game machine of FIG. 1,

FIG. 11 is a flow chart implemented in the case that a kick-target mode is selected in the soccer game machine of FIG. 1,

FIG. 12 is a diagram showing an example of the target when the kick-target mode is executed in the soccer game machine of FIG. 1,

FIG. 13 is a diagram showing another example of the target when the kick-target mode is executed in the soccer game machine of FIG. 1,

FIG. 14 is a diagram showing a state where the target hit by the ball is destroyed when the kick-target mode is executed in the soccer game machine of FIG. 1,

FIG. 15 is a diagram of an example of the display image showing a result of execution of the kick-target mode in the soccer game machine of FIG. 1,

FIG. 16 is a diagram showing another example of the target when the kick-target mode is executed in the soccer game machine of FIG. 1,

FIG. 17 is a diagram showing still another example of the target when the kick-target mode is executed in the soccer game machine of FIG. 1,

FIG. 18 is a diagram showing further another example of the target when the kick-target mode is executed in the soccer game machine of FIG. 1,

FIG. 19 is a diagram showing still further another example of the target when the kick-target mode is executed in the soccer game machine of FIG. 1,

FIG. 20 is a flow chart implemented in the case that a set-play mode is selected in the soccer game machine of FIG. 1,

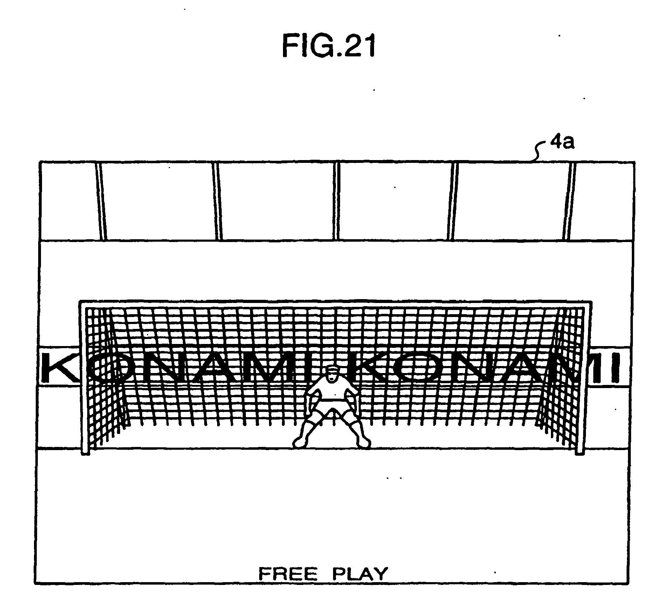

FIG. 21 is a diagram showing a display pattern of a penalty kick as one of the set-play modes in the soccer game machine of FIG. 1,

FIG. 22 is a diagram showing a display pattern of a free kick as one of the set-play modes in the soccer game machine of FIG. 1,

FIG. 23 is a diagram showing a presentation pattern after the free kick as one of the set-play modes was made in the soccer game machine of FIG. 1,

FIG. 24 is a flow chart implemented in the case that an ability measuring mode is selected in the soccer game machine of FIG. 1,

FIG. 25 is a flow chart implemented when a speed measurement as one of the ability measuring mode is executed in the soccer game machine of FIG. 1,

FIG. 26 is a diagram showing a display pattern of the speed measurement in the soccer game machine of FIG. 1,

FIG. 27 is a diagram showing a display pattern of a result of execution of the speed measurement in the soccer game machine of FIG. 1,

FIG. 28 is a flow chart implemented when a long-kick measurement as one of the ability measuring mode is executed in the soccer game machine of FIG. 1,

FIG. 29 is a diagram showing a display pattern of a result of execution of the long-kick measurement in the soccer game machine of FIG. 1,

FIG. 30 is a flow chart implemented when a quick-kick measurement as one of the ability measuring mode is executed in the soccer game machine of FIG. 1,

FIG. 31 is a diagram showing a display pattern of a result of execution of the quick-kick measurement in the soccer game machine of FIG. 1,

FIG. 32 is a flow chart implemented when a judgment measurement as one of the ability measuring modes is executed in the soccer game machine of FIG. 1, and

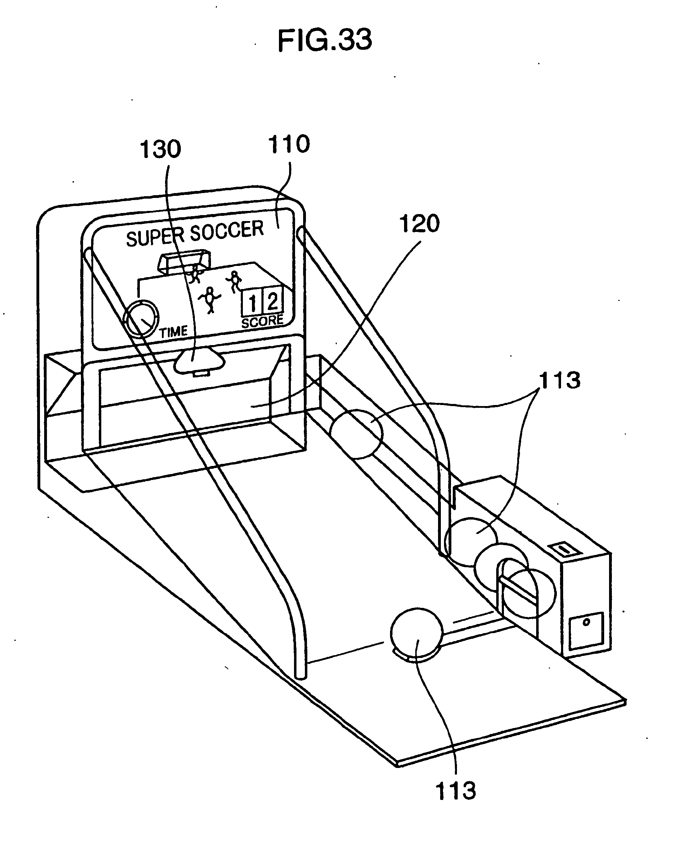

FIG. 33 is a perspective view showing a prior art soccer game machine.

## DETAILED DESCRIPTION OF THE PREFERRED EMBODIMENTS OF THE INVENTION

Hereinafter, one embodiment of the present invention is described with reference to the accompanying drawings.

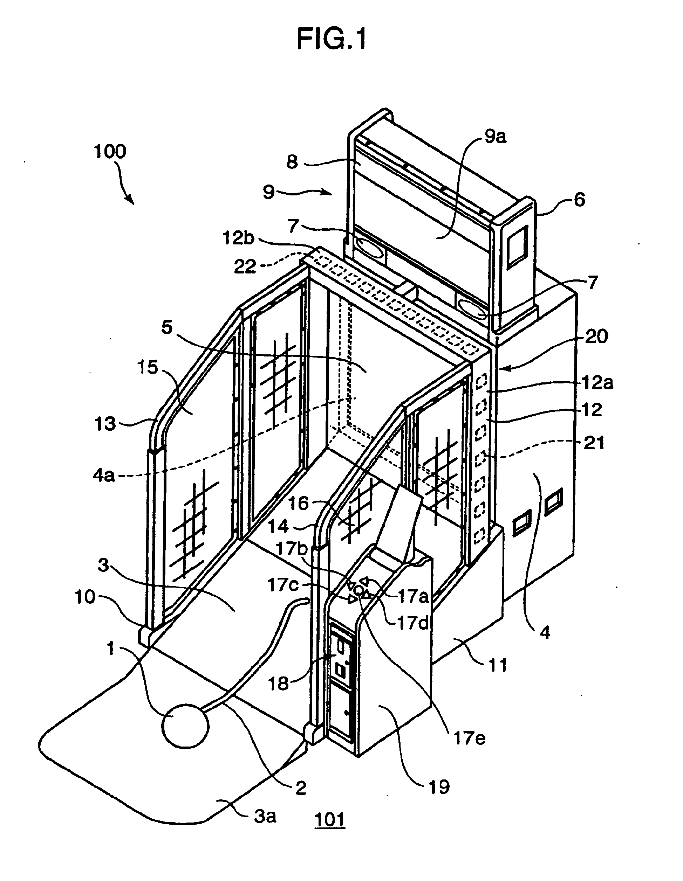

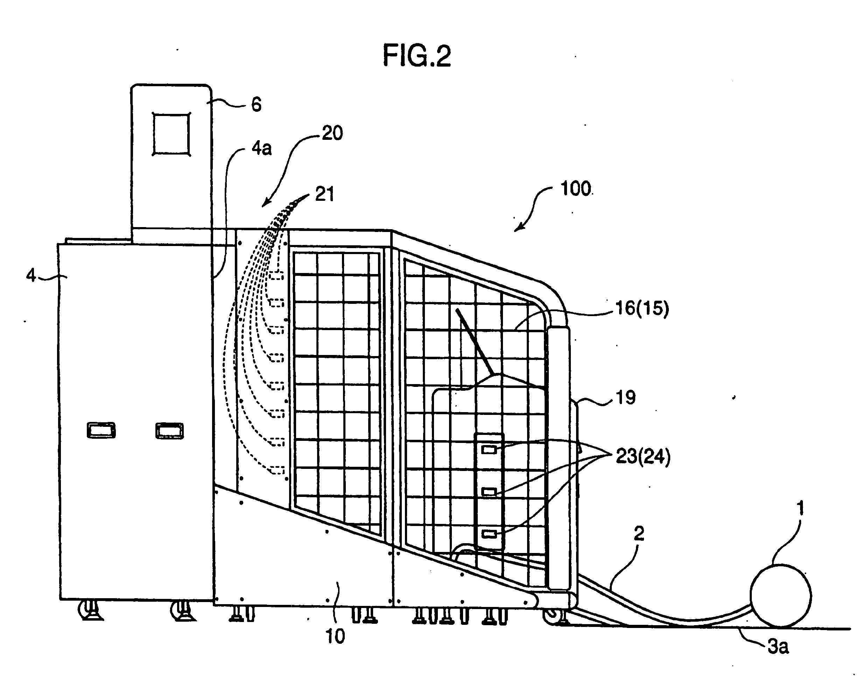

FIG. 1 is a perspective view showing an outer configuration of a soccer game machine according to one embodiment of the present invention when obliquely viewed from front right, and FIG. 2 is a left side view of the soccer game machine of FIG. 1.

This soccer game machine 100 is provided with a ball 1 to be kicked by a game player, a rope 2 having one end connected with the ball 1, a sloped table 3 connected with the other end of the rope 2, a display device 4 provided before the game player and behind the sloped table 3 and having a display screen 4a, and a ball receiver 5 provided at a side (front side) of the display screen 4a of the display device 4 toward the game player. A large screen of about 50 inches is, for example, used as the display screen 4a.

The ball receiver 5 is provided to prevent the ball 1 from colliding with the display screen 4a, and is formed of a transparent or semitransparent resin sheet so as to enable images to be displayed on the display screen 4a to be recognized. The material, thickness and the like of the resin sheet 5 are so set as not to be broken by the kicked ball 1. A spacing between the sheet 5 and the display screen 4a is set at such a value that a portion of the sheet 5 hit by the ball 1 does not touch the display screen 4a.

A box 6 is provided atop the display device 4, and has three areas. Loudspeakers 7 are provided in a bottom area, an electric decoration 8 comprised of a multitude of spot lights is provided in an upper area, and an illumination 9 covered by an acrylic resin plate 9a is provided in a middle area. Characters such as "SOCCER GAME" are, for example, printed on the acrylic resin plate 9a.

Substantially wedge-shaped supporting tables 10, 11 are provided at the left and right sides of the sloped table 3, and a gate-shaped frame 12 is mounted atop the rear parts of the supporting tables 11, 12. Net mounting frames 13, 14 are secured to the front sides of the supporting tables 10, 11 with respect to the frame 12, and nets 15, 16 are fitted in the respective net mounting frames 13, 14. An operation box 19 is provided outside the right net mounting frame 14. Four selection buttons 17a, 17b, 17c and 17d and one confirmation button 17e are provided at an upper part of the operation box 19, and a coin inserting device 18 is provided at the front side thereof.

At the front side of the sloped table 3, a play surface forming member 3a which is flat except its portion toward the display screen 4a is integrally provided. The play surface forming member 3a is so designed as to minimize a step from a floor 101 on which the soccer game machine 100 is placed. Thus, even if the game player moves from the floor 101 to the play surface forming member 3a, he can kick the ball without having any feeling of incongruity and without feeling difficulty to kick since the step is small. The length of the rope 2 is so adjusted that the ball 1 is positioned on the play surface forming member 3a, and is not kicked far beyond the frame 12 and the net mounting frames 13, 14, particularly do not hit the box 6.

A two-dimensional (2D) sensor 20 is provided on the frame 12 (see FIG. 1). This 2D sensor 20 is comprised of a plurality of reflection-type optical sensors 21 provided on a right strut 12a of the frame 12 and a plurality of reflection-type optical sensors 22 provided on an upper beam 12b. The respective optical sensors 21 are so arranged that lights emitted from light emitting elements for detection propagate in horizontal direction, and light detecting elements detect the lights reflected by the kicked ball 1, thereby detecting the height position of the ball 1. On the other hand, the respective optical sensors 22 are so arranged that lights emitted from light emitting elements for detection propagate in downward direction, and light detecting elements detect the lights reflected by the kicked ball 1, thereby detecting the lateral position of the ball 1.

The operation box 19 is provided with a linear sensor 23 (see FIG. 2). This linear sensor 23 is comprised of a plurality of reflection-type optical sensors 24 arranged at specified intervals in height direction, and the respective optical sensors 24 are so arranged that lights emitted from light emitting elements for detection propagate in horizontal direction and avoid interference with the net 16. The light reflected by the kicked ball 1 is detected by a light detecting element of the corresponding optical sensor 24, with the result that the linear sensor 23 detects passage and passing height of the ball 1. It should be noted that the optical sensors 21, 22, 24 may be transmission-type optical sensors which make a detection when their detection lights are blocked by the ball.

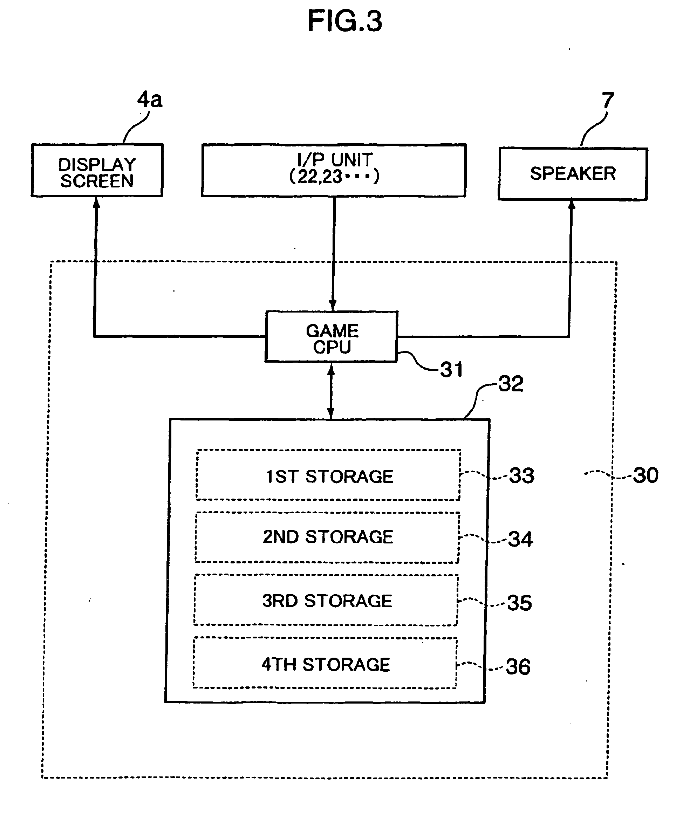

Detection signals (on/off signals) of the 2D sensor 20 and the linear sensor 23 are sent to a control unit 30 shown in FIG. 3 which is built in the display device 4.

The control unit 30 is provided with a CPU 31 and a memory unit 32 which includes a first storage 33 for storing a game program, etc., a second storage 34 for storing various image data and character data to be displayed, a third storage 35 for storing sound data, and a fourth storage 36 as a work area. The first storage 33 is, for example, a ROM, and the game program and the like stored therein are read therefrom and stored in the fourth storage 36 which is, for example, a RAM.

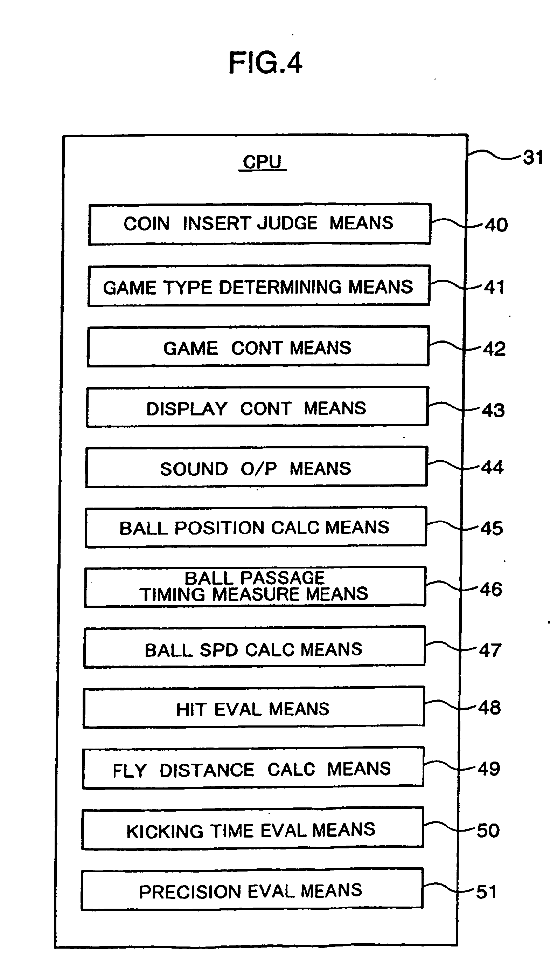

As shown in FIG. 4, the CPU 31 is provided with a coin insertion judging means 40, a game type determining means 41, a game control means 42, a display control means 43, a sound output control means 44, a ball position calculating means 45, a ball passage timing measuring means 46, a ball speed calculating means 47, a hit evaluating means 48, a flying distance calculating means 49, a kicking time evaluating means 50 and a precision evaluating means 51.

The coin insertion judging means 40 judges insertion of a coin upon receiving a detection signal from an unillustrated coin insertion detecting sensor provided in the coin inserting device 18.

The game type determining means 41 determines one game from a plurality of types of games set in advance, i.e. from four types of games: real-play mode, kick-target mode, set-play mode and ability measuring mode in this embodiment, when the confirmation button 17e is pressed after operation of a desired selection button 17a or the like. In determining the game type, titles of four types of games are displayed on the display screen 4a.

The real-play mode is a full-scale soccer game mode in which a game proceeds as an actual soccer game does. Basically, the game is automatically proceeded, and the game player is caused to make a "pass" or "shoot" at crucial points of time during the game.

The kick-target mode is such that the ball 1 is kicked to hit a plurality of targets displayed on the display screen 4a. If the speed of the ball 1 is a reference speed or faster, such a display that the target panel is broken into pieces is made.

The set-play mode is such that a penalty kick, a free kick and a corner kick are successively performed by kicking the ball 1 while aiming at a goal and the like.

The ability measuring mode is such that a speed measurement, a long-kick measurement, a quick-kick measurement and a judgment measurement are successively performed to evaluate abilities as a soccer player. The speed measurement is a game in which the speed of the kicked ball 1 is measured and competed. The long-kick measurement is a game in which the flying distance of the kicked ball 1 is measured and competed. The quick-kick measurement is a game in which a time required to kick the ball 1 after a cueing display is made on the display screen 4a is measured and competed. The judgment measurement is a game in which the display screen 4a is divided into two left and right (or upper and lower) areas, an alternative question is given by means of pictures displayed in the respective areas, the game player is caused to kick the ball into the area where he thinks right, and how many right answers were given within a time limit is measured and competed. The game contents of the above kick-target mode to the ability measuring mode are set in the game program.

The game control means 42 controls the respective elements of the soccer game machine 100 in accordance with the game program. Until a coin is inserted, the game control means 42 outputs signals to the display control means 43 and the sound output control means 44 to display a demonstration image for presentation. When a coin is inserted, the game control means 42 starts a game and ends it upon reaching a specified state. It should be noted that the game control means 42 also outputs the signals to the display control means 43 and the sound output control means 44 during the game so that specified game presentations can be made.

The display control means 43 reads the image data and the player characters from the second storage 34 and the like upon receipt of the signal from the game control means 42, and displays the read images and characters on the display screen 4a. The display control means 43 also controllably turns the electric decoration 8 on and off.

The sound output control means 44 outputs a presentation sound via the loudspeakers 7 based on the sound data stored in the third storage 35 upon receipt of the signal from the game control means 42.

The ball position calculating means 45 calculates the position of the ball 1 when the ball 1 is struck against the sheet 5 based on the on/off-signal from the 2D sensor 20.

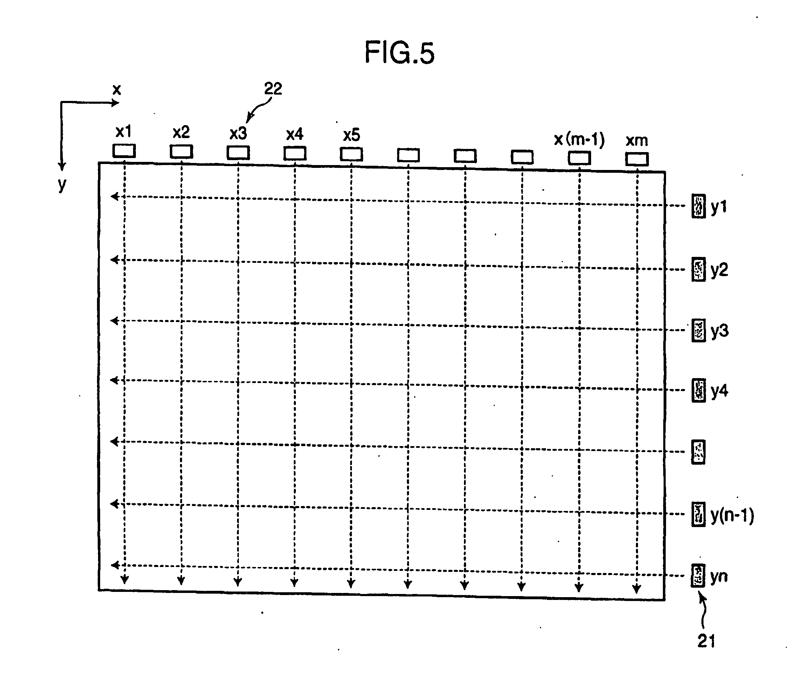

As shown in FIG. 5, a plurality of optical sensors 21 arranged in height direction are used to detect a Y-position (height position), and a plurality of optical sensors 22 arranged in lateral direction are used to detect an X-position (lateral position). Here, the optical sensors 21 are y1, y2, y3, y4 ...y(n-1), y(n) from the top, whereas the optical sensors 22 are x1, x2, x3, x4 ...x(m-1), x(m) from the left, where n, m are positive integers.

For example, if the light from the light emitting element of the optical sensor x5 is reflected by the ball 1, the state of the light detecting element of the optical sensor x5 is changed from OFF to ON. Further, if the light from the light emitting element of the optical sensor y4 is reflected by the ball 1, the state of the light detecting element of the optical sensor y4 is changed from OFF to ON. The ball position calculating means 45 having received changes in the state of these signals detects that the ball 1 has passed a position where the lateral position x5 and the height position y4 intersect. When the reflected light is simultaneously detected by the light detecting elements of the two adjacent ones of the optical sensors 22 for detecting the X-position and of the optical sensors 21 for detecting the Y-position, middle positions of these are adopted as positions of detection. Further, if two optical sensors spaced apart from each other by a specified distance or longer detect the light at delayed detection timings, the position of the optical sensor having first detected the reflected light is adopted as a position of detection. While calculating the ball position, the ball position calculating means 45 detects that the ball 1 has been kicked against the sheet 5.

The ball passage timing measuring means 46 has a timer function, and measures a ball detection timing by the linear sensor 23 (T1) and a ball detection timing by the 2D sensor 20 (T2).

The ball speed calculating means 47 calculates the speed of the ball 1 (ball speed) based on the ball position data measured by the ball position calculating means 45, the detection timings (T1, T2) measured by the ball passage timing measuring means 46, and the on/off-signal from the linear sensor 23. Specifically, the ball speed calculating means 47 calculates the ball speed as follows.

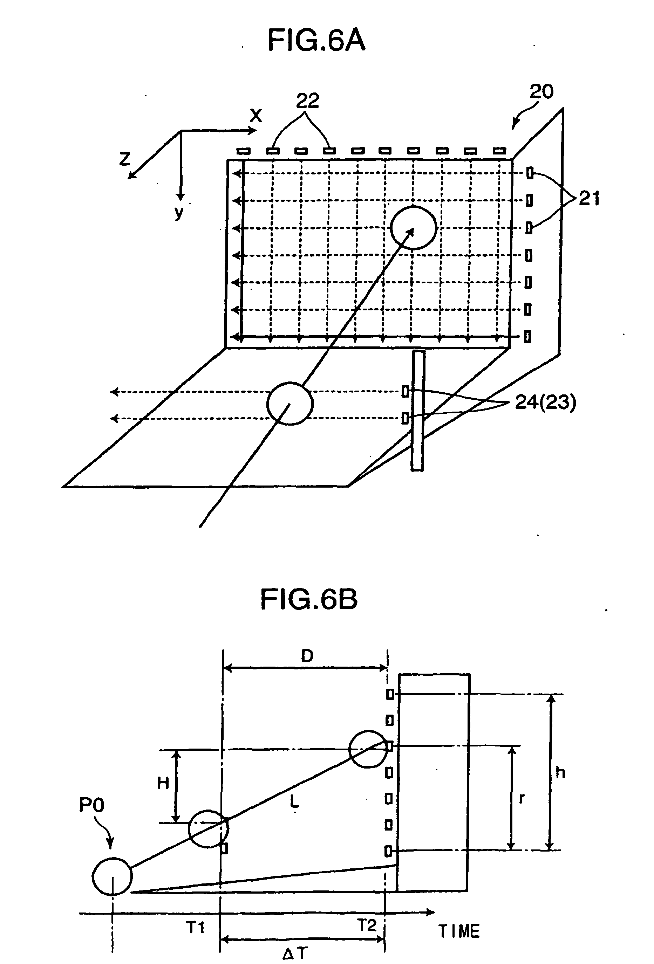

The ball 1 kicked by the game player has its passage first detected by the linear sensor 23 as shown in FIG. 6A and has its position detected by the 2D sensor 20 as described above. These detection timings (T1, T2) are measured by the ball passage timing measuring means 46.

At this time, a relationship between the detection positions by the linear sensor 23 and the 2D sensor 20 is as shown in FIG. 6B. A distance L between the height position of the ball 1 detected by the linear sensor 23 and the height position of the ball 1 detected by the 2D sensor 20 is expressed by following equation (1) if D, H denote a spacing between the linear sensor 23 and the 2D sensor 20 in horizontal direction and a difference between the height position detected by the linear sensor 23 and the one detected by the 2D sensor 20. However, this equation (1) takes no account of a displacement between the X-direction position of the ball 1 when the ball 1 passes a detection area of the linear sensor 23 and the one when the ball 1 passes a detection area of the 2D sensor 20 when the ball 1 is moving in oblique direction.

$$L = \sqrt{(D^2 + H^2)} \quad \ldots(1)$$

Thus, the ball speed S can be obtained by following equation (2) if a difference $\Delta T$ (= T2-T1) between the detection timings T1 and T2 is known.

$$S = L/\Delta T \quad \ldots(2)$$

The equations (1) and (2) are stored together with the game program and the like in the first storage 33, and the ball speed calculating means 47 reads these equations from the fourth storage 36 and calculates the ball speed S based on the ball position (height) measured by the ball position calculating means 45, the detection timings (T1, T2) measured by the ball passage timing measuring means 46, and the on/off-signal from the linear sensor 23 in accordance with the two equations (1), (2). The ball speed S is displayed on the display screen 4a during the corresponding game.

The hit evaluating means 48 discriminates whether or not the ball position measured by the ball position calculating means 45 falls within a kick-in area (specifically coordinate data) corresponding to the size of the aforementioned target panel and goal, and judges "IN" if the ball position falls within the kick-in area while judging "OUT" unless otherwise. In the case of making a pass, the hit evaluating means 48 discriminates by calculation whether or not the ball position falls within a defense area (specifically coordinate data) of a player character, and judges "IN" if the ball position falls within the defense area while judging "OUT" unless otherwise. In the case of making a judgment measurement, the hit evaluating means 48 discriminates as in the above cases whether or not the ball 1 has entered a right area, and judges "IN" if the ball has entered the right area while judging "OUT" unless otherwise. The kick-in area, the defense area and the right area (specifically, coordinate data) are stored in the first storage 33, and used after being read from the fourth storage 36 to which these data have been transferred. The hit evaluating means 48 calculates a ratio of the number of times it judged "IN" to the number of times set in advance, and evaluates the game result based on the calculated ratio. The number of times set in advance is suitably determined depending on the type of the game.

The flying distance calculating means 49 calculates the flying distance of the ball 1 at the time of the long-kick measurement. Briefly, the flying distance calculating means 49 calculates an initial velocity and an angle of elevation of a ball character on the display screen 4a based on the height positions of the ball 1 detected by the 2D sensor 20 and the linear sensor 23 and the ball speed calculated by the ball speed calculating means 47, and determines a flying state of the ball character on the display screen 4a by performing a further calculation using the initial velocity and the angle of elevation.

Specifically, the flying distance is calculated as follows. An initial velocity V0 (= $\Delta T/L$) is calculated by dividing the difference $\Delta T$ between the detection timings of the linear sensor 23 and the 2D sensor 20 by the distance L. Further, an angle of elevation R is calculated by following equation (3) assuming that h, r denote a distance between the optical sensor 21 at the bottommost position and the optical sensor 21 at the topmost position of the 2D sensor 20, and the height position of the ball 1 detected by the 2D sensor 20.

$$R = a1 \times [1-(r/h)] + a2 \times (r/h) \quad \ldots(3)$$

where a1 is an angle (e.g. 30°) between a line connecting the kicked position of the ball 1 (assumed position determined by the length of the rope 2) and the optical sensor 21 at the bottommost position and horizontal direction, and a2 is an angle (e.g. 75°) between a line connecting the kicked position of the ball (assumed position) and the optical sensor 21 at the topmost position and horizontal direction.

Although the angle of elevation R is calculated by equation (3) in order to shorten a calculation time, it may be calculated based on the height position of the ball 1 detected by the 2D sensor 20 and the one detected by the linear sensor 23.

Next, a vector V having an angular component and a velocity component with respect to horizontal direction is calculated at regular intervals using the initial velocity V0 and the angle of elevation R. An initial position (P0) of the ball character is assumed to be a virtual position on the display screen 4a. The vector V obtained at regular intervals is calculated as follows assuming that Vx, Vy, Vt denote its horizontal-direction component, its height-direction component, and a previously obtained vector. The calculation method differs depending on whether the ball 1 flies in the air or bounces on the ground.

(1) When the ball 1 flies in the air

Vx and Vy are obtained by following equations (4), (5), respectively.

$$Vx = Vtx\text{-}K1 \qquad \ldots(4)$$

where K1 is a coefficient relating to air resistance.

$$Vy = Vty\text{-}G \qquad \ldots(5)$$

where G is a coefficient relating to gravity.
The vector V is calculated as a sum of Vx and Vy if the obtained Vy is larger than 0.

(2) When the ball 1 bounces on the ground

First, Vy is calculated by the above equation (5). If the value of Vy is 0 or smaller, the ball 1 is judged to have bounced, and Vy is calculated again by following equation (6).

$$Vy = b \times Vty \qquad \ldots(6)$$

where b is a coefficient (0<b<1) relating to a ratio of the height of the ball after bouncing to the one before bouncing (bouncing height ratio).
Subsequently, Vx is calculated by following equation (7).

$$Vx = Vtx\text{-}K2 \qquad \ldots(7)$$

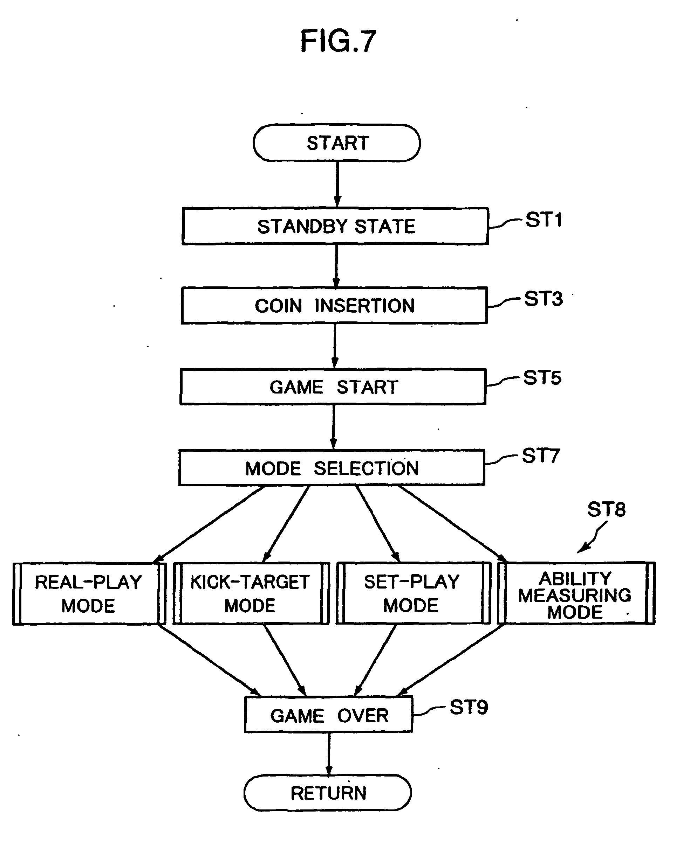

where K2 is a coefficient relating to resistance subjected from the ground.
A sum of the calculated value of Vx and the calculated value of Vx by the equation (6) is then obtained.
The above series of calculations are performed at regular intervals, and the flying distance is calculated based on a difference between a point where Vx becomes 0 and the initial position (P0). It should be noted that the flying distance calculating means 49 obtains a trajectory of the ball 1 based on the above calculated values obtained at regular intervals and outputs it to the display control means 43, which in turn causes the flying state of the ball character to be displayed on the display screen 4a.
The kicking time evaluating means 50 measures a period of time which elapses until the ball 1 is detected by the 2D sensor 20 after a cue is displayed on the display screen 4a at the time of the quick-kick measurement in the aforementioned ability measuring mode.
The precision evaluating means 51 receives the number of times the ball 1 was kicked in the right area and judged to be "IN" from the hit evaluating means 48 at the time of the judgment measurement in the aforementioned ability measuring mode, counts and evaluates this number of right answers during a time limit.
Next, the game contents of the soccer game machine thus constructed are described.
First, as shown in FIG. 7, when the soccer game machine is turned on, it enters a standby state where a specified presentation sound is outputted via the loudspeakers 7 and the electric decoration 8 is blinked at a specified pattern (Step ST1). When a coin is inserted (Step ST3) thereafter, the coin insertion judging means 40 judges insertion of the coin in accordance with a signal from the coin insertion detecting sensor (not shown) (Step ST5), and the titles of the four types of the game modes are displayed on the display screen 4a, a sound output for urging the game player to select the game mode is outputted via the loudspeakers 7, and the game player selects a desired game mode (Step ST7). Then, the selected mode is entered (Step ST8), the game ends after a while (Step ST9) and the soccer game machine returns to the standby state (Step ST1).

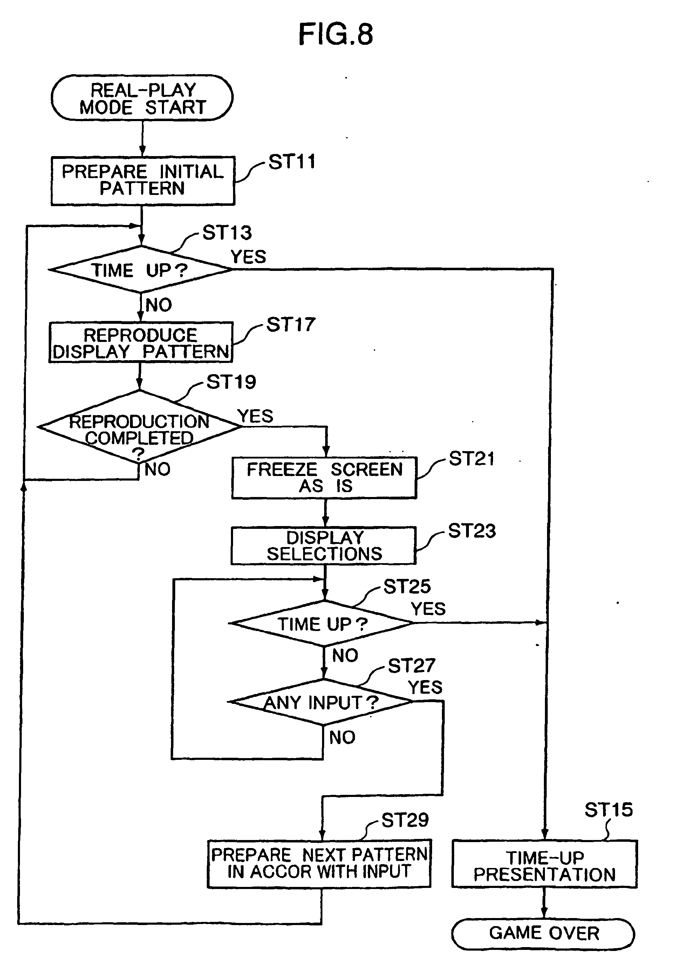

FIG. 8 is a flow chart implemented when the real-play mode is selected. As described above, the real-play mode is a full-scale game mode in which the game proceeds as an actual soccer game does. Basically, the game is automatically proceeded, and the game player is caused to make a "pass" or "shoot" at crucial points of time during the game.

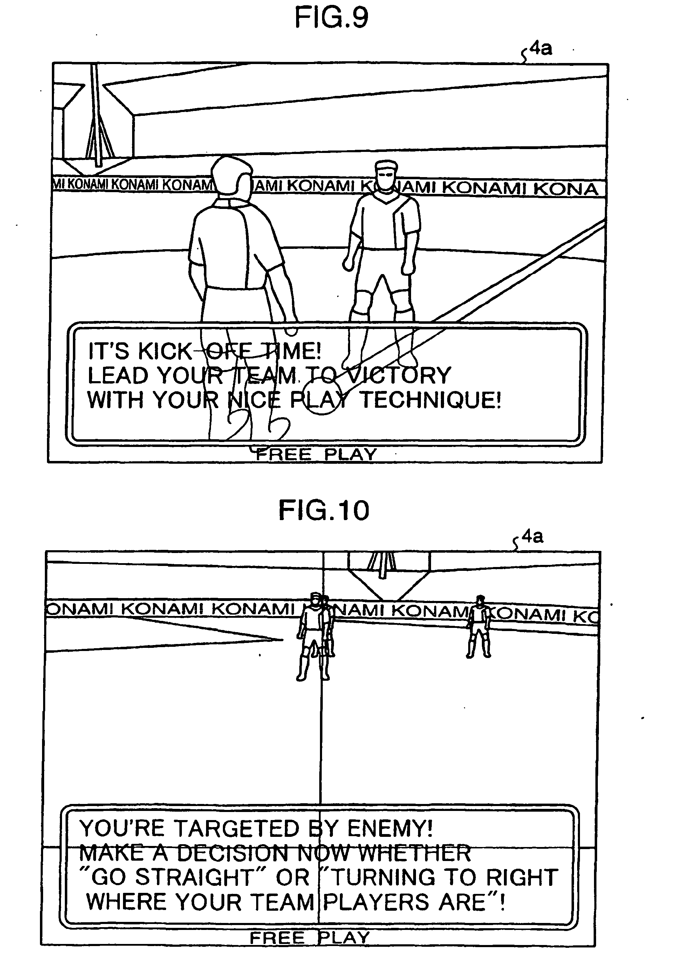

First, a display pattern relating to a game starting state is prepared (Step ST11) and it is then discriminated whether time has been up (Step ST13). If time has been up, a time-up presentation is given by means of the loudspeakers 7 and the electric decoration 8 (Step ST15), then ending the game. Since time is not yet up at this stage, the prepared display pattern is reproduced on the display screen 4a as shown in FIG. 9 (Step ST17). The display pattern of FIG. 9 shows a game starting state by kickoff. It is then discriminated whether the reproduction has been completed (Step ST19). Steps ST13 to ST19 are repeated if the discrimination result in Step ST19 is negative.

On the other hand, if the reproduction is judged to have been completed in Step ST19, the screen is left at pause (Step ST21). Since kickoff is to be made at this stage, a choice of "pass" or "kick" is displayed (Step ST23). It is then discriminated whether time has been up (Step ST25). This routine proceeds to Step ST15 if time has been up, thereby ending the game. On the other hand, unless time has been up, the presence of an input from the linear sensor 23 and the like is discriminated (Step ST27). Steps ST25, ST27 are repeated in the absence of an input, whereas a next display pattern corresponding to the input, e.g. the position and speed of the ball 1, is prepared (Step ST29) in the presence of an input. Thereafter, Steps ST13 to ST29 are repeated, and a choice of "Going Straight" or "Going to the Right" is, for example, displayed on the display surface 4a as shown in FIG. 10 in Step ST23.

Thereafter, the time-up presentation is given (Step ST15) if time is up in Step ST13 or ST25, then ending the game.

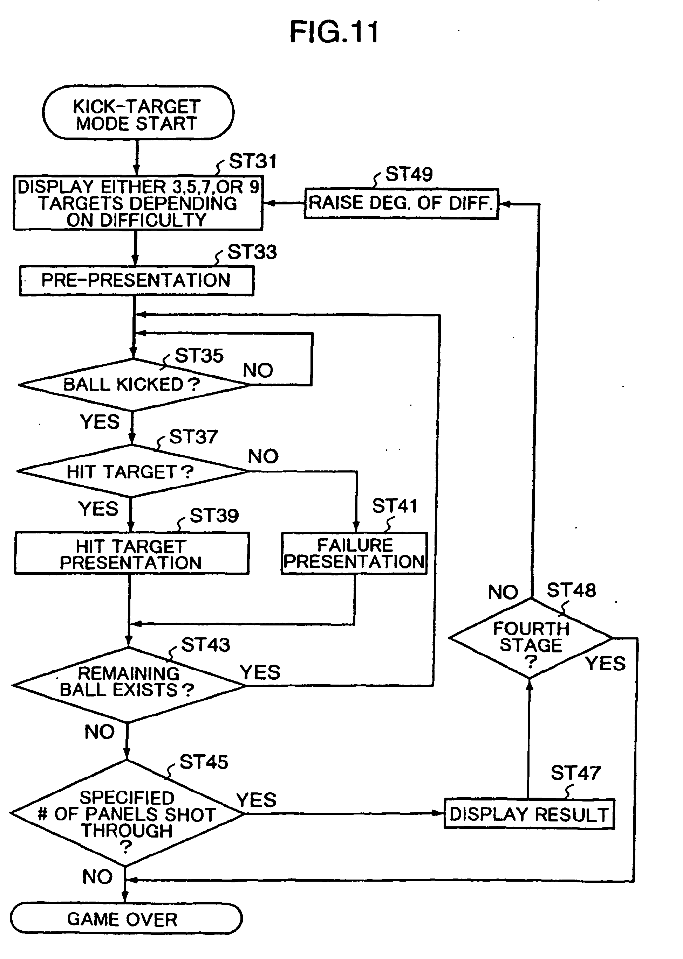

FIG. 11 is a flow chart implemented when the kick-target mode is selected. As described above, this kick-target mode is a mode in which the ball 1 is kicked to hit a plurality of target panels displayed on the display screen 4a.

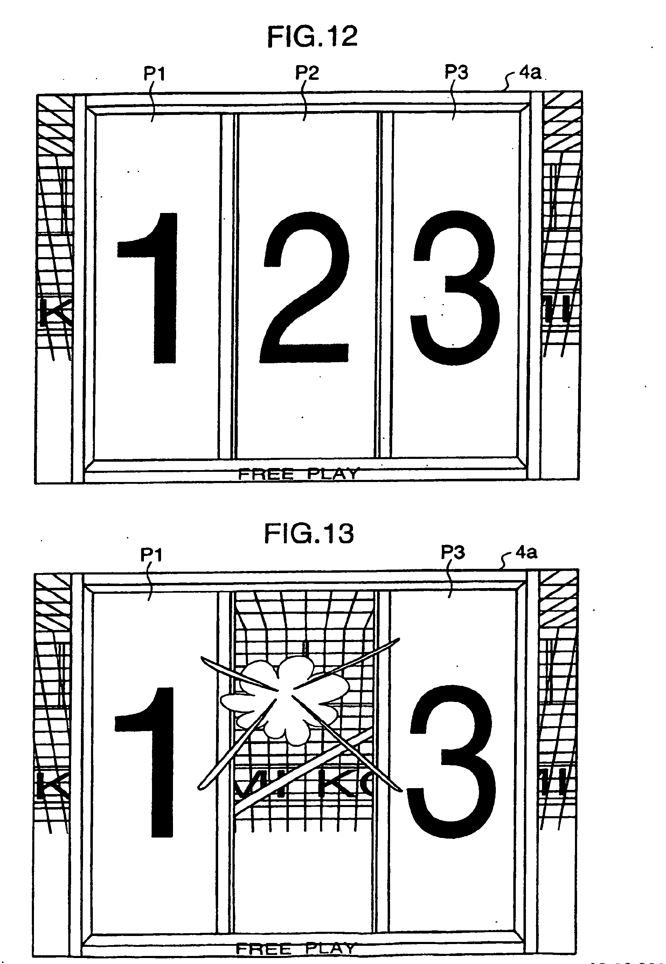

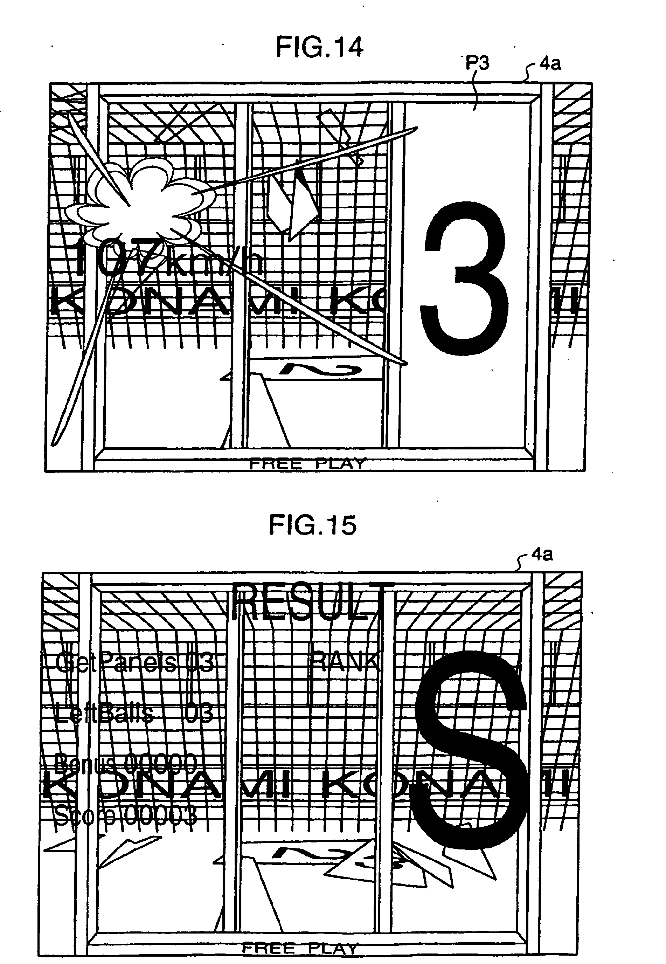

First, a display pattern for the first stage in which three target panels P1, P2, P3 having a low degree of difficulty is prepared as shown in FIG. 12 and displayed on the display screen 4a (Step ST31). A prior presentation is made by means of video images and sounds (Step ST33) and it is then discriminated whether the ball 1 has been kicked (Step ST35). This discrimination is made until the ball 1 is kicked. When the ball 1 is kicked, it is discriminated whether the ball 1 has hit the target panel (Step ST37), and a target-hit presentation is given (Step ST39) if it has hit the target panel. This presentation is such that the ball speed is calculated and a state where the target panel (P2) is shot through is displayed as shown in FIG. 13 if the calculated value is smaller than a reference value, whereas a state where the target panel is broken into pieces is displayed as shown in FIG. 14 if the calculated value is equal to or larger than the reference value. Then, Step ST43 follows. On the other hand, a failure presentation is given (Step ST41) if the ball missed the target panel and then Step ST43 follows.

In Step ST43, it is discriminated whether there still remain(s) ball(s) to be kicked, i.e. a remaining ball number is checked. Unless the remaining ball number is 0, Steps ST35 to ST43 are repeated. The remaining ball number is a value obtained by subtracting the number of the already kicked balls from the number of the balls set in advance. On the other hand, if the remaining ball number is 0, it is discriminated that a specified number of panels or more have been shot through (Step ST45). The game is ended if the discrimination result in Step ST45 is negative.

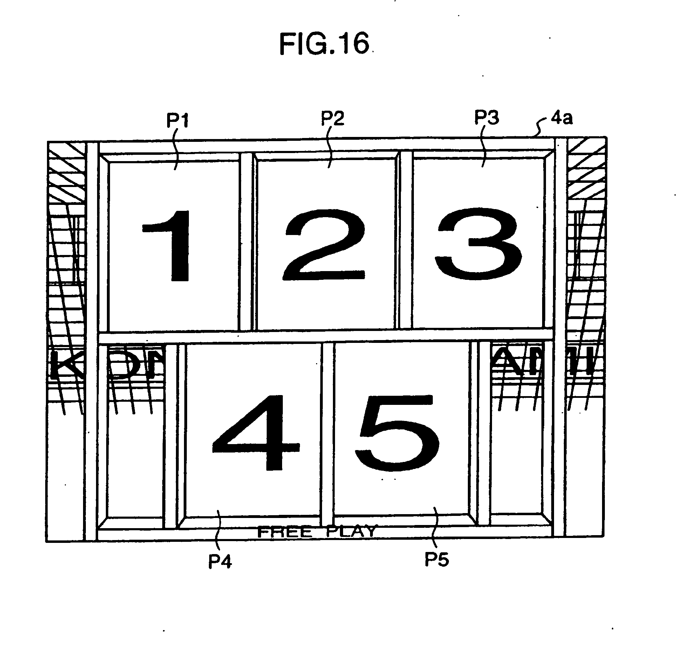

On the other hand, if the specified number of panels or more have been shot through (YES in Step ST45), a result is displayed as shown in FIG. 15 (Step ST47) and it is discriminated whether the game is at the fourth stage (Step ST48). Since the fourth stage is not yet reached at this time, an instruction to upgrade the degree of difficulty is given (Step ST49) and Step ST31 then follows, where a display pattern for the second stage in which five target panels P1 to P5 having a higher degree of difficulty are displayed as shown in FIG. 16 is prepared and displayed on the display screen 4a.

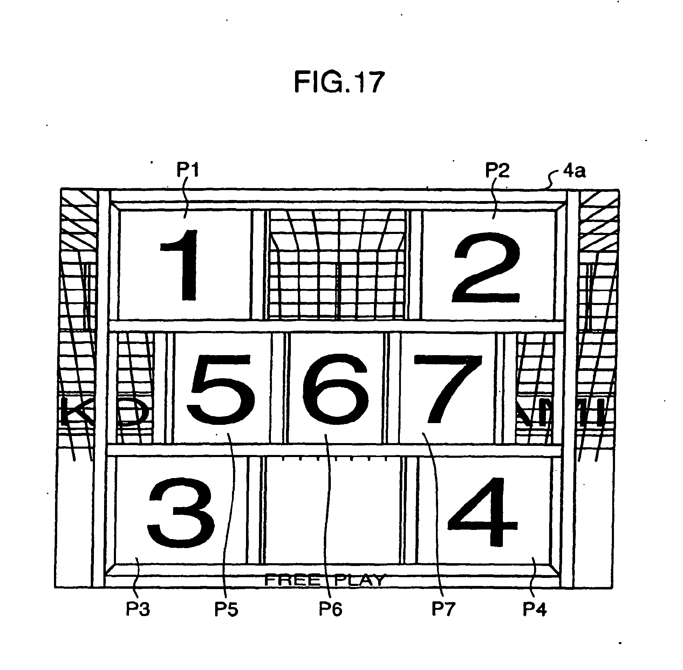

Thereafter, Steps ST33 to ST45 are repeated. If a specified number of panels or more are judged to have been shot through in Step ST45 (YES in Step ST45), a result is displayed (Step ST47) and it is discriminated whether the game is at the fourth stage (Step ST48). Since the fourth stage is not yet reached at this time, the instruction to upgrade the degree of difficulty is given (Step ST49) and Step ST31 then follows, where a display pattern for the third stage in which seven target panels P1 to P7 having an even higher degree of difficulty are displayed as shown in FIG. 17 is prepared and displayed on the display screen 4a.

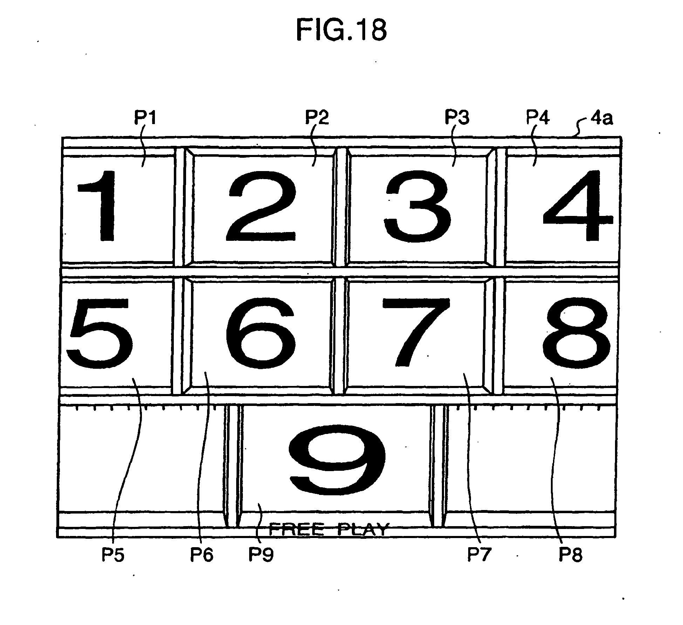

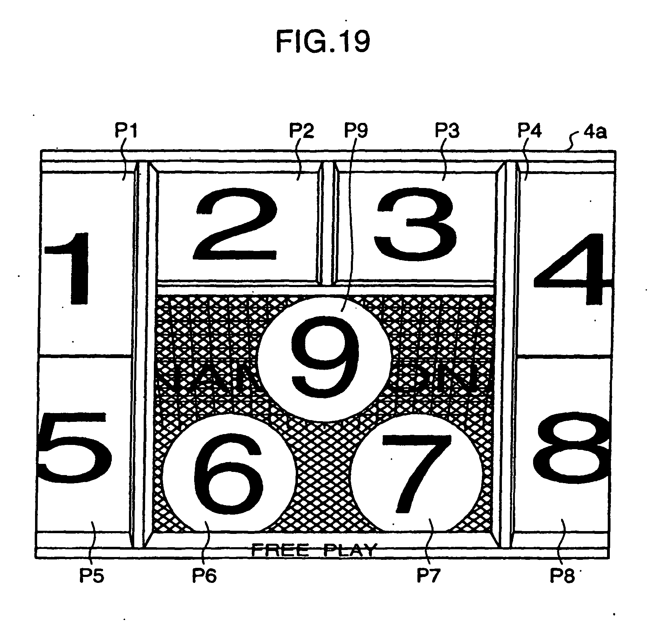

Thereafter, Steps ST33 to ST45 are repeated. If a specified number of panels or more are judged to have been shot through in Step ST45 (YES in Step ST45), a result is displayed (Step ST47) and it is discriminated whether the game is at the fourth stage (Step ST48). Since the fourth stage is not yet reached at this time, the instruction to upgrade the degree of difficulty is given (Step ST49) and Step ST31 then follows, where a display pattern for the fourth stage in which nine target panels P1 to P9 having a much higher degree of difficulty are displayed as shown in FIG. 18 is prepared and displayed on the display screen 4a. Instead of the display pattern of FIG. 18, a display pattern in which no partition is given between two adjacent target panel (P1 and P5, P4 and P8) so that two panels can be simultaneously shot through as shown in FIG. 19 may be used.

Thereafter, Steps ST33 to ST45 are repeated. If a specified number of panels or more are judged to have been shot through in Step ST45 (YES in Step ST45), a result is displayed (Step ST47) and it is discriminated whether the game is at the fourth stage (Step ST48). Since the game is at the fourth stage at this time, it is ended.

Although the number of the target panels is changed from three to five, to seven, to nine by changing the stage three times in the aforementioned kick-target mode, its change is not necessarily limited thereto. For example, the number of the target panels may be changed from three to five, to seven or from three to seven, to nine by changing the stage twice or from three to five or from three to nine, etc. by changing the stage once, or the stage may not be changed at all. Further, the number of the target panels may be decreased or increased and decreased when the stage is changed. Furthermore, regardless of whether or not the stage is to be changed, any desired number may be selected as the number of the target panels provided that it is 2 or larger.

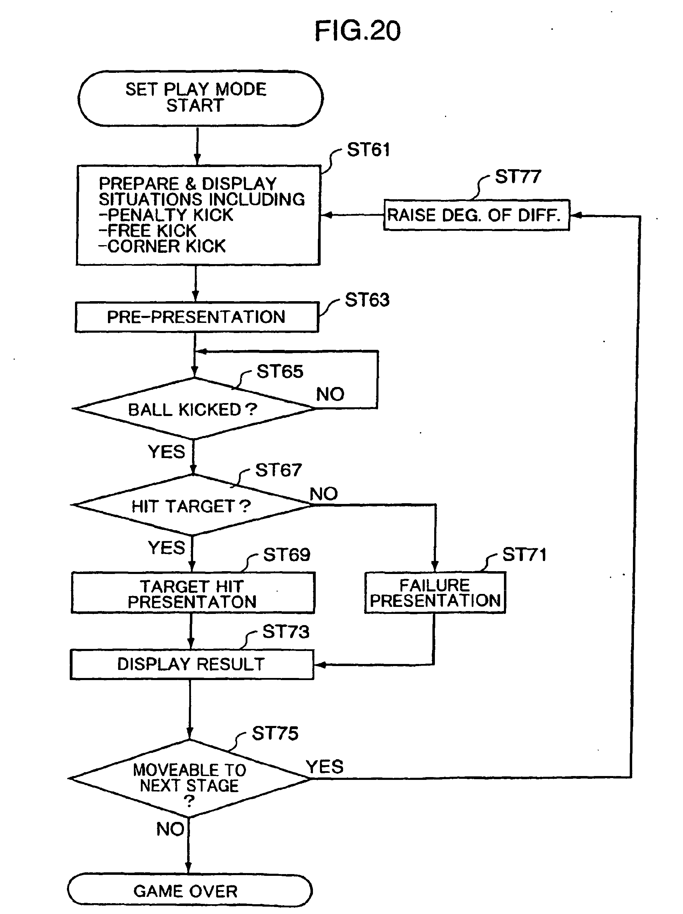

FIG. 20 is a flow chart implemented when the set-play mode is selected. As described above, the set-play mode is a mode in which a penalty kick, a free kick and a corner kick are successively performed by kicking the ball 1 while aiming at a goal and the like.

First, a display pattern for the penalty kick having a low degree of difficulty is prepared and displayed on the display screen 4a as shown in FIG. 12 (Step ST61). A prior presentation is then made by means of video images and sounds (Step ST63) and it is then discriminated whether the ball 1 has been kicked (Step ST65). This discrimination is made until the ball 1 is kicked. When the ball 1 is kicked, the hit evaluating means 48 discriminates whether the kicked ball 1 has hit the target (Step ST67). Here, the target can be a goal or a player on the same side and the hit can mean entrance to the goal or a pass to the player on the same side.

A target-hit presentation is given (Step ST69) in the case of hitting the target, and Step ST73 follows. On the other hand, a failure presentation is given (Step ST71) if the ball missed the target and then Step ST73 follows.

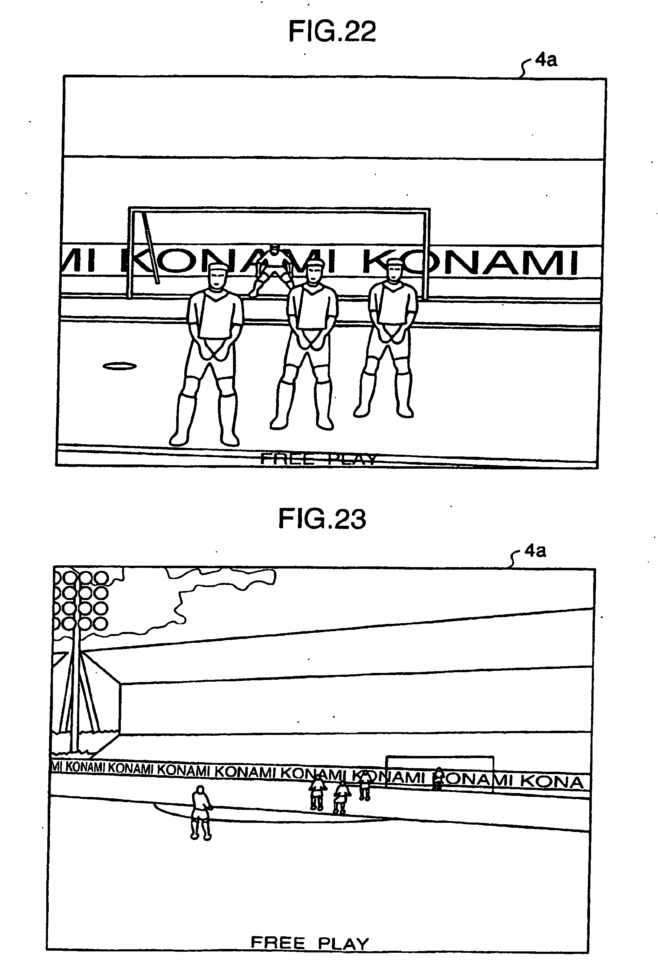

In Step ST73, a result is displayed and it is judged whether the game player can move on to the next stage (Step ST75). The game is ended if the game player cannot move on to the next stage. On the other hand, if he can move on to the next stage, an instruction to upgrade the degree of difficulty is given (Step ST77) and a display pattern for the free kick shown in FIG. 22 is prepared and displayed on the display screen 4a (Step ST61). FIG. 23 shows a display after the free kick. Subsequently, Steps ST63 to ST75 are repeated and if it is judged that the game player can move on to the next stage in Step ST75, a display pattern for the corner kick (not shown) is prepared and displayed (Step ST61). The game is ended after repeating Steps ST63 to ST75.

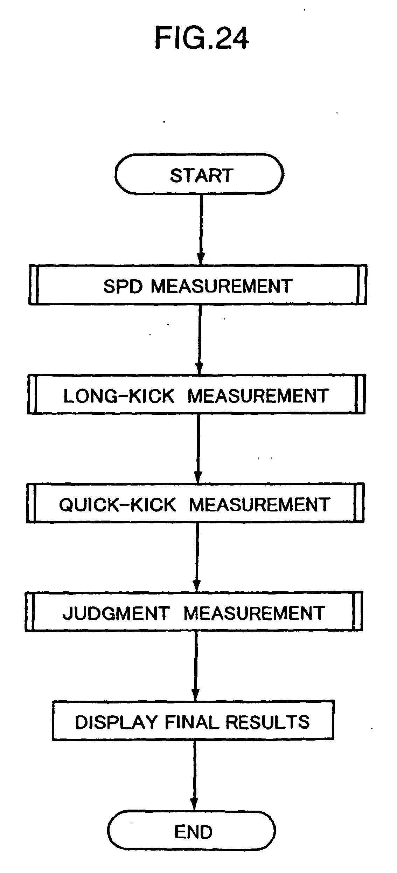

FIG. 24 is a flow chart implemented when the ability measuring mode is selected. As described above, the ability measuring mode is a mode in which the speed measurement, the long-kick measurement, the quick-kick measurement and the judgment measurement are successively performed. The game is ended after a final result is displayed.

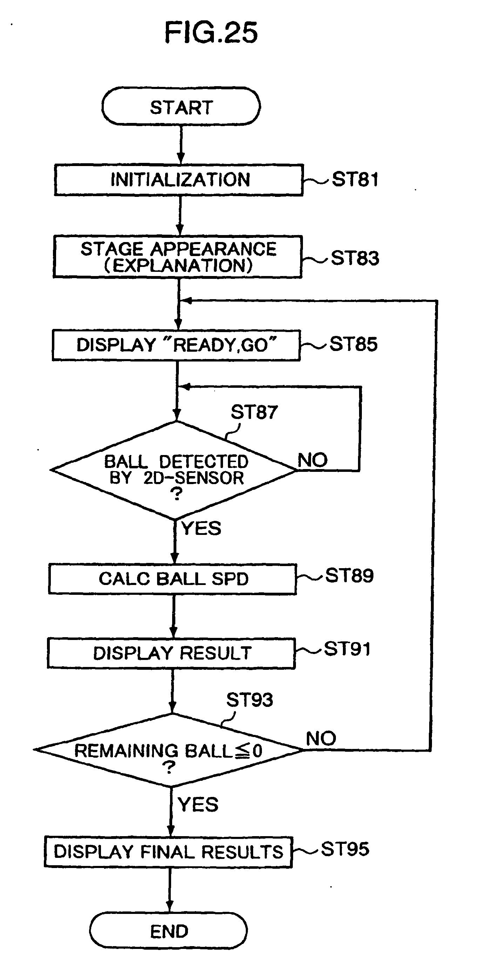

FIG. 25 is a flow chart implemented when the speed measurement is executed. As described above, the speed measurement is a game in which the speed of the kicked ball 1 is measured and competed.

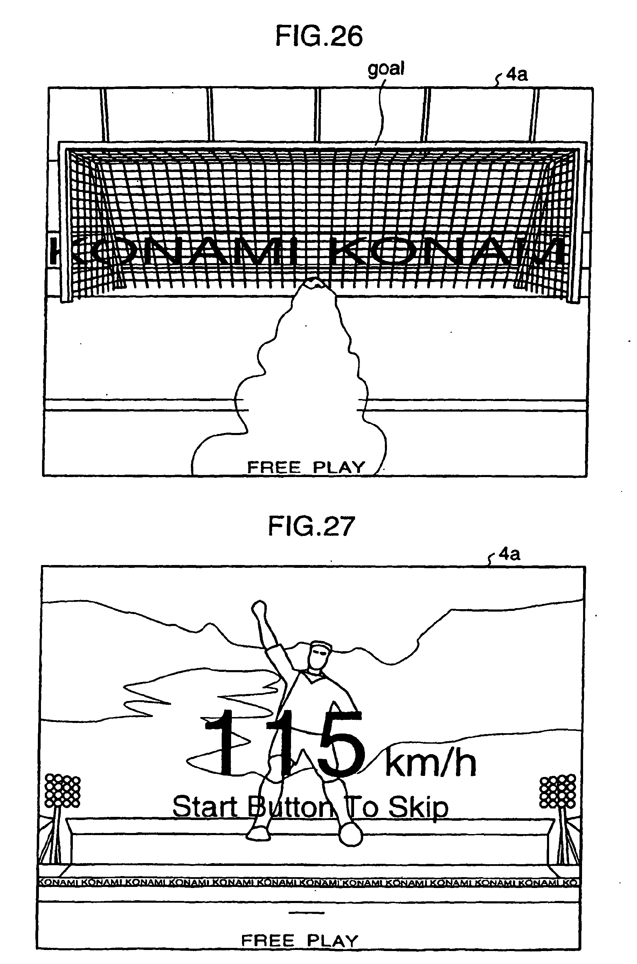

First, data and the like are initialized (Step ST81), and a display representing kicking the ball 1 toward the goal, for example, as shown in FIG. 26 is made and the game contents are explained via the loudspeakers 7 (Step ST83). Subsequently, a display "READY, GO" is made on the display screen 4a (Step ST85), and it is discriminated whether the ball 1 has been kicked toward the display screen 4, i.e. the ball 1 has been detected by the 2D sensor 20 (Step ST87). If the ball 1 is detected, the ball speed calculating means 47 calculates the ball speed S (Step ST89) and displays it (115 km/h) as shown in FIG. 27 (Step ST91). Subsequently, it is discriminated whether there is any remaining ball, i.e. the remaining ball number is 0 or smaller (Step ST93). If the remaining ball number is 1 or larger, Steps ST85 to ST93 are repeated. If the remaining ball number is 0 in Step ST93, a final result is displayed (Step ST95) and the game is ended.

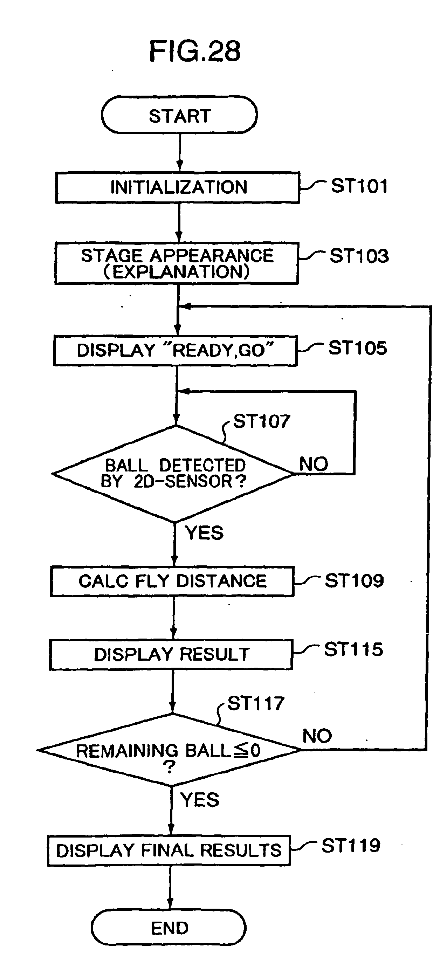

FIG. 28 is a flow chart implemented when the long-kick measurement is executed. As described above, the lock-kick measurement is a game in which the flying distance of the kicked ball 1 is measured and competed.

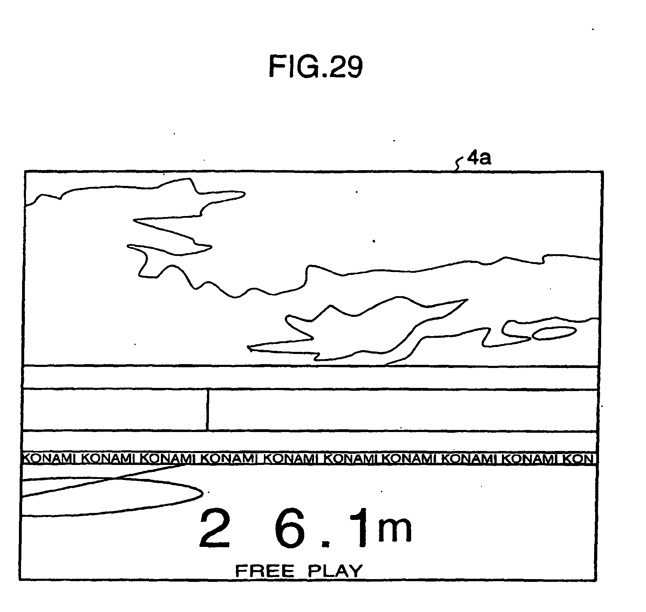

First, data and the like are initialized (Step ST101), and a display representing kicking of the ball 1 toward the goal or the player on the same side is made and the game contents are explained via the loudspeakers 7 (Step ST103). Subsequently, a display "READY, GO" is made on the display screen 4a (Step ST105), and it is discriminated whether the ball 1 has been kicked toward the display screen 4, i.e. the ball 1 has been detected by the 2D sensor 20 (Step ST107). If the ball 1 is detected, the flying distance calculating means 49 calculates the flying distance as described above (Step ST109) and a result is displayed as shown in FIG. 29 (Step ST115). Subsequently, it is discriminated whether there is any remaining ball, i.e. the remaining ball number is 0 (Step ST117). If the remaining ball number is 1 or larger, Steps ST105 to ST117 are repeated. If the remaining ball number is 0 in Step ST117, a final result is displayed (Step ST119) and the game is ended.

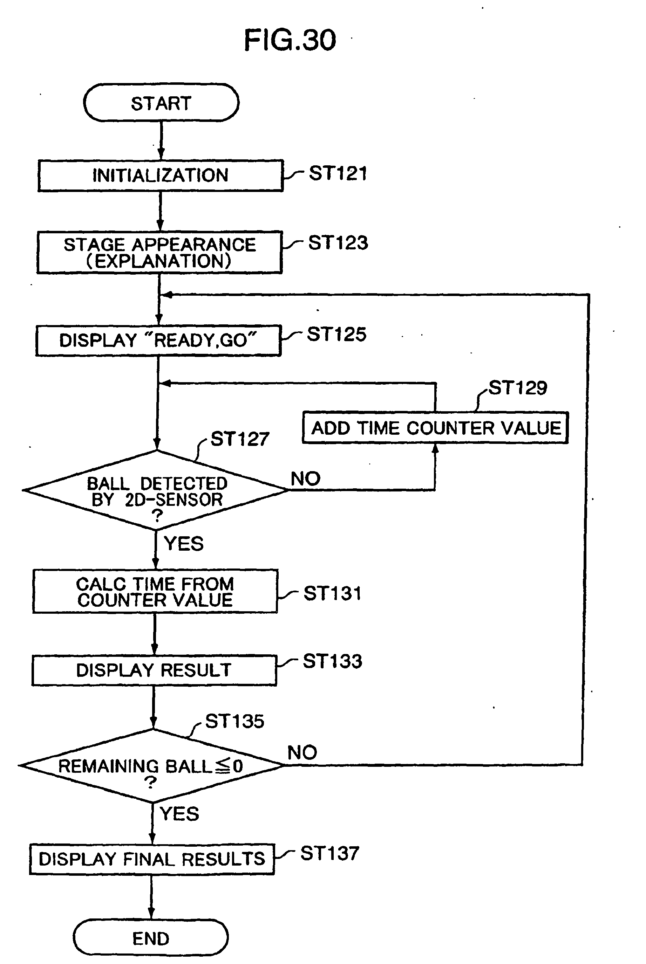

FIG. 30 is a flow chart implemented when the quick-kick measurement is executed. As described above, the quick-kick measurement is a game in which a time required to kick the ball 1 after a cueing display is made on the display screen 4a is measured and competed.

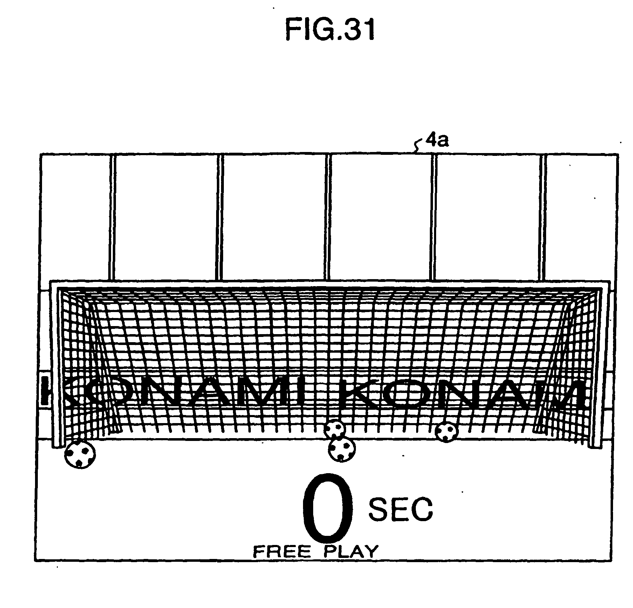

First, data and the like are initialized (Step ST121), and a display representing kicking of the ball 1 toward the goal is made and the game contents are explained via the loudspeakers 7 (Step ST123). Subsequently, a display "READY, GO" is made on the display screen 4a (Step ST125), and it is discriminated at regular intervals whether the ball 1 has been kicked toward the display screen 4a, i.e. the ball 1 has been detected by the 2D sensor 20 (Step ST127). If the ball 1 has not been detected, the kicking time evaluating means 50 repeats an operation of adding a time counter value from the cueing display at regular intervals (Step ST129). On the other hand, if the ball 1 has been detected, the kicking time evaluating means 50 calculates a time based on the time counter value at that time (Step ST131), and a result which is a time (e.g. in seconds) is displayed on the display screen 4a as shown in FIG. 31 (Step ST133). It is then discriminated whether there is any remaining ball (Step ST135). Steps ST123 to ST135 are repeated in the presence of the remaining ball(s), whereas a final result is displayed on the display screen 4a (Step ST137) in the absence of the remaining ball and the game is ended.

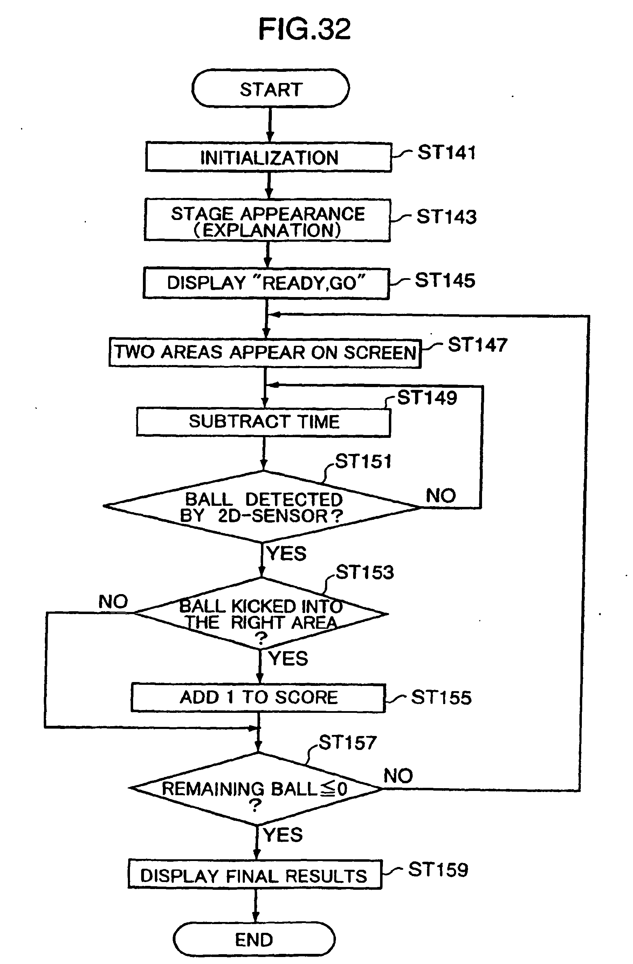

FIG. 32 is a flow chart implemented when the judgment measurement is executed. As described above, this judgment measurement is a game in which the display screen 4a is divided into two left and right (or upper and lower) areas, an alternative question is given by means of a sound output via the loudspeakers 7, the game player is caused to kick the ball 1 into the area where he thinks right, and how many right answers were given within a time limit is measured and competed.

First, data and the like are initialized (Step ST141), and an image during the game is displayed and the game contents are explained via the loudspeakers 7 (Step ST143). Subsequently, a display "READY, GO" is made on the display screen 4a (Step ST145), and the display screen 4a is divided into two left and right (upper and lower) areas (Step ST147). A remaining time is calculated by subtracting a lapse of time from a specified time set in advance (Step ST149), and it is discriminated whether the ball 1 has been kicked toward the display screen 4a, i.e. the ball 1 has been detected by the 2D sensor 20 (Step ST151). Steps ST149 and 151 are repeated if the ball 1 has not been detected, whereas the precision evaluating means 51 discriminates whether the ball 1 has been kicked into the right area (Step ST153) if the ball 1 has been detected. If the ball 1 has been kicked into the right area, it is discriminated whether a remaining time is 0 (Step ST157) after adding 1 to the score (Step ST155). Steps ST145 to ST157 are repeated in the presence of the remaining time, whereas a final result is displayed (Step ST159) and the game is ended in the absence of the remaining time.

The aforementioned measurements of four types of the ability measuring mode may not be performed in the above order, but in an other order. Further, it is not necessary to perform all four types of measurements in the ability measuring mode, and one, two or more (or five or more) types of measurements may be performed.

Accordingly, in this embodiment, the positions of the targets can be easily changed by changing the image data read from the second storage 34 every time the targets are displayed on the display screen 4a. For example, the image data are changed according to the progress of the game in the real-play mode, and the image data are changed by renewing the stage in the kick-target mode. Since the sheet 5 for enabling the display screen 4a to be seen is provided in front of the display screen 4a, the ball 1 can be kicked while being aimed at the target, with the result that the game can be more enjoyed. Since the 2D sensor 20 optically detects the height position and the lateral position of the ball 1 with respect to the display screen 4a, the hitting position of the ball 1 can be specified. Further, since the ball position calculating means 45 calculates the height position and the lateral position of the ball 1 and the hit evaluating means 48 judges whether the kicked ball 1 has hit or missed the target based on the calculated value, a more precise judgment than a visual judgment can be made. Furthermore, since a plurality of targets are successively set as aims to be hit and the result is determined based on the number of the targets hit by the ball 1, the target to be aimed at can be selected unlike the game in which only one target is aimed at. Thus, the game can be made even more enjoyable. Further, since a plurality of optical sensors 24 of the linear sensor 23 are arranged in height direction, that the ball 1 has been kicked can be securely detected regardless of the height of the kicked ball 1. Furthermore, since the ball speed calculating means 47 calculates the speed of the ball 1 based on the detection results of the linear sensor 23 and the 2D sensor 20, the game in which the ball speed is competed can be realized. Further, since the flying distance calculating means 49 calculates a moving state of the ball 1 based on the data from the linear sensor 23 and the 2D sensor 20 and the calculated moving state is displayed by means of the ball character on the display screen 4a, the trajectory of the kicked ball 1 can be confirmed on the display screen 4a in a simulated manner, thereby enabling the gaming situation to be realistically reproduced. Furthermore, since the sloped table 3 lowered toward the game player is provided at the side of the display device 4 toward the game player, the kicked ball 1 can be naturally returned to the game player by the inclination of the sloped table 3.

Although the resin sheet is used for the ball receiver provided in front of the display screen in the foregoing embodiment, the material for the ball receiver is not limited to sheets, and a mesh or a sheet formed with many perforations may be used.

Although one game can be selectively executed from four types of games including the real-play mode, the kick-target mode, the set-play mode and the ability measuring mode in the foregoing embodiment, the present invention is not limited thereto and two or more games may be selectively executed from the above four types of games. Further, executable games are not limited to the four types of games, and other games may be executed.

Although it is not clearly mentioned in the foregoing embodiment, the flying state of the ball 1 which is obtained based on the calculation result of the flying distance calculating means 49 may be reproduced by means of the ball character on the display screen 4a not only in the long-kick measurement, but also in all games or may be applied to any desired game. Such an arrangement enables the game player to enjoy the game in a more realistic situation.

Although the present invention is applied to the soccer game in which the ball is kicked in the foregoing embodiment, it is not limited thereto. For example, the present invention is also applicable to a batting game in which a ball is hit by a bat, a golf game in which a ball is hit by a golf club, a tennis or table tennis game in which a ball is hit by a racket, and other games. In the case of such games, the aforementioned real-play mode, kick-target mode, set-play mode and ability measuring mode can be so set as to conform to batting, golf, table tennis and the like. The present invention is further applicable to any other game which uses a ball.

The present invention is also applicable to games which use flying elements other than balls such as foods including eggs, tomatoes, pies, models or stuffed dolls of snow balls, stones and rocks, or models (or real) or stuffed dolls of arrows, Frisbees, boomerangs.

Further, the present invention is also applicable to games in general in which these flying elements are not only kicked, but also thrown by hand, headed, or handled using an other body part of the game player or in which the game player hits the flying element using an instrument (other than the bat, the golf club and the like mentioned above).

Although the intervals at which the respective optical sensors 21, 22, 24 are arranged are not clearly mentioned in the foregoing embodiment, it is preferable to set the intervals in accordance with the type and size of the flying elements to be used so that one flying element is in principle detected by one optical sensor. For example, the optical sensors are arranged at narrow intervals in the case of small flying elements such as balls. Conversely, they are arranged at wide intervals in the case of large flying elements. Further, in the case of using flying elements having a shape other than a spherical shape, the intervals of the optical sensors may be so set in accordance with the shape of the flying element that one flying element is in principle detected by one optical sensor. Even if the intervals are set as above, two optical sensors may simultaneously detect one flying element. In such a case, if a middle position between these two optical sensors is used as a detection position, the position of the flying element can be detected.

As described in detail above, in the game machine according to the present invention, the positions of the targets can be easily changed by changing the image data since the targets are displayed on the display screen of the display means, and the flying element can be flown while being aimed at the target since the flying element receiver which enables the display screen to be seen is provided in front of the display screen. Thus, the game can be more enjoyably played.

Further, since the 2D sensor optically detects the height position and the lateral position of the flying element with respect to the display screen, the position where the flying element hits can be specified.

Furthermore, since the calculating means calculates the height position and the lateral position of the flying element and the evaluating means judges whether the flying element has hit or missed the target based on the calculated value, a more precise judgment than a visual judgment can be made.

Further, since a plurality of targets set are successively set as aims to be hit and the result is determined based on the number of the targets hit by the flying element, the target to be aimed at can be selected unlike the case where the game is played by aiming at only one target. Thus, the game can be made more enjoyable.

Furthermore, since a plurality of optical sensors are arranged in height direction, that the flying element has been flown can be securely detected regardless of the height of the flown flying element.

Further, since the second calculating means calculates the speed of the flying element based on the detection results of the linear sensor and the 2D sensor, the game in which the speed of the flying element is competed can be realized.

Furthermore, since the moving trajectory of the flown flying element can be confirmed on the display screen in a simulated manner, the gaming situation can be realistically reproduced on the display screen.

Further, the flown flying element can be naturally returned to the game player by the inclination of the sloped table.

Furthermore, since the rope is connected with the flying element, the flying element is free to fly in the direction in which it was flown, the flying element can be prevented from inadvertently hitting things around the game machine and the position of the flying element which returns to the game player along the sloped table can be adjusted by the length of the rope.

As this invention may be embodied in several forms without departing from the essential characteristics thereof, the present embodiment is therefore illustrative and not restrictive, since the scope of the invention is defined by the appended claims rather than by the description preceding them, and all changes that fall within metes and bounds of the claims, are therefore intended to be embraced.

**Claims**

**1.** A game machine comprising:

a display means (4) having a display screen (4a) on which a target is to be displayed;

a flying element (1) to be flown toward the display screen (4a) by an motion of a game player;

a flying element receiver (5) provided in front of the display screen (4a) such that the display screen (4a) can be seen through said flying element receiver (5);

a detecting means for detecting a moving state of the flying element (1) flown by the game player; and

an evaluating means (48) for evaluating a result relating to the motion of the game player based on a detection result of the detecting means,

**characterized in** comprising a linear sensor (23) which comprises a plurality of optical sensors (23) which are so arranged at specified intervals in height direction that lights emitted from light emitting elements for detection propagate in horizontal direction, and the optical sensors (23) detect passage and passing height of he flying element (1), and the

detecting means includes a two-dimensional sensor (20) for optically detecting a height position and a lateral position of the flying element (1) with respect to the display screen (4a), wherein the two-dimensional sensor (20) includes a plurality of optical sensors (21) which are so arranged in height direction while being spaced apart at specified intervals that lights emitted from light emitting elements for detection propagate in horizontal direction, and the optical sensors (21) detect the lights reflected by the flying element (1), thereby detecting the height position of the flying element (1), and wherein the two dimensional sensor further includes

a plurality of optical sensors (22) which are so arranged in lateral direction while being spaced apart at specified intervals that lights emitted from light emitting elements for detection propagate in downward direction, and the optical sensors (22) detect the lights reflected by the flying element (1), thereby detecting the lateral position of the ball, where the distance (D) between said two-dimensional sensor (20) and the linear sensor (23) in a horizontal direction is preset and

a flying element passage timing measuring means (46) to detect the timings (T1, T2) when the flying element (1) has its position first detected by the linear sensor (23) and its position detected by the two-dimensional sensor (20), and

a calculating means (49) for calculating the flying distance of the flying element (1) using data from the flying element passage timing measuring means (46), the linear sensor (23) and the two-dimensional sensor (20) is provided, wherein the flying distance is used to display a flying state of a ball character on the display screen (4a).

2. A game machine according to claim 1, wherein the flying element (1) is a ball.

3. A game machine according to claim 1 or 2, wherein the flying element receiver (5) is formed of a transparent or semitransparent resin sheet.

4. A game machine according to any one of claims 1 to 3, wherein the detecting means includes a calculating means (45) for calculating the height position and the lateral position of the flying element (1) based on ON/OFF-states of the optical sensors (21, 22) of the two-dimensional sensor (20), and the evaluating means (48) evaluates the result based on whether or not the height position and the lateral position obtained by the calculating means lie within an area of the target displayed on the display screen (4a) while specifying a height range and a lateral range.

5. A game machine according to claim 4, wherein a plurality of target areas are set, and the evaluating means (48) evaluates the result based on the number of targets in which areas the height position and the lateral position have lain.

6. A game machine according to any of claims 1 to 5, wherein the detecting means includes the optical detecting sensor (23) which is provided in a position spaced apart toward the game player from the two-dimensional sensor for optically detecting at least passage of the flying element.

7. A game machine according to claim 1, further comprising a second calculating means (47) for calculating a speed of the flying element (1) based on a time delay between an ON/OFF switching timing of the linear sensor (23) and an ON/OFF switching timing of the two-dimensional sensor (20).

8. A game machine according to any of claims 1 to 7, wherein the display means (4a) displays the moving state calculated by the calculating means (49) by means of a flying element character on the display screen (4a).

9. A game machine according to any of claims 2 to 8, further comprising a play surface forming member (3a) provided in front of the display screen (4a) for placing the flying element (1) thereon, and a sloped table (3) provided between the display screen (4a) and the play surface forming member (3a) and lowered toward the play surface forming member (3a).

10. A game machine according to claim 9, further comprising a rope (2) having one end connected with the sloped table (3) and the other end connected with the flying element (1).

**Patentansprüche**

1. Spielmaschine bzw. -automat, umfassend:

ein Anzeigemittel (4) mit einem Anzeigebildschirm (4a), auf dem ein Ziel anzuzeigen ist;
ein Flugelement (1), das durch eine Bewegung eines Spielteilnehmers zu dem Anzeigebildschirm (4a) hin fliegt;
einen Flugelementaufnehmer (5), der vor dem Anzeigebildschirm (4a) derart vorgesehen ist, dass der Anzeigebildschirm (4a) durch den Flugelementaufnehmer (5) gesehen werden kann;
ein Detektiermittel zum Detektieren eines Bewegungszustands des Flugelements (1), das durch dem Spielteilnehmer fliegen gelassen wird; und
ein Auswertungsmittel (48) zum Auswerten eines Ergebnisses betreffend die Bewegung des Spielteilnehmers basierend auf einem Detektionsergebnis des Detektiermittels,
**gekennzeichnet durch** das Umfassen eines linearen Sensors (23), der eine Mehrzahl optischer Sensoren (23) umfasst, die so in spezifizierten Intervallen in der Höhenrichtung angeordnet sind, dass Lichter von lichtemittierenden Elementen zur Detektion sich in horizontaler Richtung fortpflanzen, und die optischen Sensoren (23) detektieren die Durchgangs- und Durchlaufhöhe des Flugelements (1), und das
Detektiermittel enthält einen zweidimensionalen Sensor (20) zum optischen Detektieren einer Höhenposition und einer lateralen Position des Flugelements (1) bezüglich dem Anzeigebildschirm (4a), wobei der zweidimensionale Sensor (20) enthält:

eine Mehrzahl optischer Sensoren (21), die, während sie voneinander beabstandet sind, so in spezifizierten Intervallen in der Höhenrichtung angeordnet sind, dass Lichter von lichtemittierenden Elementen zur Detektion sich in horizontaler Richtung fortpflanzen, und die optischen Sensoren (21) detektieren die Lichter, die von dem Flugelement (1) reflektiert werden, wodurch sie die Höhenposition des Flugelements (1) detektieren, und wobei der zweidimensionale Sensor weiter enthält:

eine Mehrzahl optischer Sensoren (22), die, während sie voneinander beabstandet sind, so in spezifizierten Intervallen in der lateralen Richtung angeordnet sind, dass Lichter von lichtemittierenden Elementen zur Detektion sich in Abwärtsrichtung fortpflanzen, und die optischen Sensoren (22) erfassen die Lichter, die von dem Flugelement (1) reflektiert werden, wodurch sie die laterale Position des Balls detektieren, wo der Abstand (D) zwischen dem zweidimensionalen Sensor (20) und dem linearen Sensor (23) in einer horizontalen Richtung voreingestellt ist, und
ein Flugelementdurchgangszeitpunktmessmittel (46) zum Detektieren der Zeitpunkte (T1, T2), wann die Position des Flugelements (1) zuerst von dem linearen Sensor (23) detektiert wird und die Position von dem zweidimensionalen Sensor (20) detektiert wird, und
ein Berechnungsmittel (49) zum Berechnen der Flugentfernung des Flugelements (1) unter Verwendung von Daten von dem Flugelementdurchgangszeitpunktmessmittel (46), dem linearen Sensor (23) und dem zweidimensionalen Sensor (20) vorgesehen ist, wobei die Flugentfernung verwendet wird, um einen Flugzustand eines Ballcharakters bzw. -figur auf dem Anzeigebildschirm (4a) anzuzeigen.

2. Spielmaschine nach Anspruch 1, wobei das Flugelement (1) ein Ball ist.

3. Spielmaschine nach Anspruch 1 oder 2, wobei der Flugelementempfänger (5) aus einer transparenten oder halbtransparenten Harzfolie gebildet ist.

4. Spielmaschine nach einem der Ansprüche 1 bis 3, wobei das Erfassungsmittel ein Berechnungsmittel (45) zum Berechnen der Höhenposition und der lateralen Position des Flugelements (1) basierend auf einem EIN-/AUS-Zustand der optischen Sensoren (21, 22) des zweidimensionalen Sensors (20) enthält und das Auswertungsmittel (48) das Ergebnis basierend darauf auswertet, ob die Höhenposition und die laterale Position, die durch das Berechnungsmittel erhalten werden, innerhalb einer Region des Ziels liegen oder nicht, der auf dem Anzeigebildschirm (4a) angezeigt wird, während sie einen Höhenbereich und einen lateralen Bereich spezifizieren.

**5.** Spielmaschine nach Anspruch 4, wobei eine Mehrzahl von Zielregionen festgelegt ist und das Auswertungsmittel (48) das Ergebnis basierend auf der Anzahl von Zielen auswertet, in dessen Regionen die Höhenposition und die laterale Position gelegen haben.

**6.** Spielmaschine nach Anspruch 1 bis 5, wobei das Detektiermittel den optischen Detektiersensor (23) enthält, der in bzw. an einer Position vorgesehen ist, die zu dem Spielteilnehmer hin von dem zweidimensionalen Sensor beabstandet ist, um zumindest einen Durchgang des Flugelements optisch zu detektieren.

**7.** Spielmaschine nach Anspruch 1, ferner umfassend ein zweites Berechnungsmittel (47) zum Berechnen einer Geschwindigkeit des Flugelements (1) basierend auf einer Zeitverzögerung zwischen einem EIN-/AUSSchaltzeitpunkt des linearen Sensors (23) und einem EIN-/AUSSchaltzeitpunkt des zweidimensionalen Sensors (20).

**8.** Spielmaschine nach einem der Ansprüche 1 bis 7, wobei das Anzeigemittel (4a) den Bewegungszustand, der von dem Berechnungsmittel (49) berechnet wird, mittels eines Flugelementcharakters bzw. -figur auf dem Anzeigebildschirm (4a) anzeigt.

**9.** Spielmaschine nach einem der Ansprüche 2 bis 8, ferner umfassend ein Spielflächebildeglied (3a), das vor dem Anzeigebildschirm (4a) vorgesehen ist, um das Flugelement (1) darauf zu platzieren, und einen abgeschrägten Tisch (3), der zwischen dem Anzeigebildschirm (4a) und dem Spielflächebildeglied (3a) vorgesehen ist und zu dem Spielflächebildeglied (3a) hin abgesenkt ist.

**10.** Spielmaschine nach Anspruch 9, ferner umfassend ein Seil (2), von dem ein Ende mit dem abgeschrängten Tisch (3) und das andere Ende mit dem Flugelement (1) verbunden ist.

**Revendications**

**1.** Machine de jeux comprenant :

un moyen d'affichage (4) ayant un écran d'affichage (4a) sur lequel une cible doit
être affichée ;
un élément à lancer (1) devant être déplacé vers l'écran d'affichage (4a) par un mouvement d'un joueur de jeu ;
un récepteur d'élément à lancer (5) prévu devant l'écran d'affichage (4a) tel que l'écran d'affichage (4a) peut
être vu à travers ledit récepteur d'élément à lancer (5) ;
un moyen de détection afin de détecter un état de déplacement de l'élément à lancer

(1) déplacé par le joueur de jeu ; et

un moyen d'évaluation (48) pour évaluer un résultat par rapport au déplacement du joueur de jeu, sur la base
d'un résultat de détection du moyen de détection,

**caractérisé en ce qu'**il comprend un capteur linéaire (23) qui comprend une pluralité de capteurs optiques (23)
qui sont agencés à intervalles spécifiés dans la direction de hauteur, cette lumière émise depuis des éléments
d'émission de lumière afin de détecter la propagation dans la direction horizontale, et **en ce que** les capteurs
optiques (23) détectent un passage et la hauteur de passage de l'élément à lancer (1), et
le moyen de détection inclut un capteur bidimensionnel (20) afin de détecter optiquement une position de hauteur
et une position latérale de l'élément à lancer (1) par rapport à l'écran d'affichage (4a), dans lequel le capteur
bidimensionnel (20) inclut :

une pluralité de capteurs optiques (21) qui sont agencés dans la direction de hauteur tout en étant espacés à
l'écart à intervalles spécifiés, cette lumière émise depuis des éléments d'émission de lumière afin de détecter
la propagation dans la direction horizontale, et les capteurs optiques (21) détectent les lumières réfléchies par
l'élément à lancer (1), détectant ainsi la position de hauteur de l'élément à lancer (1), et dans lequel le capteur
bidimensionnel inclut en outre :

une pluralité de capteurs optiques (22) qui sont ainsi agencés dans la direction latérale, tout en étant
espacés à l'écart à intervalles spécifiés, cette lumière émise depuis des éléments d'émission de lumière
afin de détecter la propagation dans la direction descendante, et les capteurs optiques (22) détectent les lumières réfléchies par l'élément à lancer (1), détectant ainsi la position latérale de la balle, où la distance (D) entre ledit capteur bidimensionnel (20) et le capteur linéaire (23) est présent dans une direction horizontale et

un moyen de mesure du moment de passage d'élément à lancer (46) afin de détecter les moments (T1, T2) quand l'élément à lancer (1) a sa position détectée en premier par le capteur linéaire (23) et sa position détectée par le capteur bidimensionnel (20), et

un moyen de calcul (49) afin de calculer la distance de vol de l'élément à lancer (1), l'utilisation des données étant prévue depuis le moyen de mesure du moment de passage d'élément à lancer (46), le capteur linéaire (23) et le capteur bidimensionnel (20), dans lequel la distance de vol est utilisée pour afficher un état de vol d'une caractéristique de balle sur l'écran d'affichage (4a).

2. Machine de jeu selon la revendication 1, dans laquelle l'élément à lancer (1) est une balle.

3. Machine de jeu selon la revendication 1 ou 2, dans laquelle le récepteur d'élément à lancer (5) est formé d'une feuille de résine transparente ou semi transparente.

4. Machine de jeu selon l'une quelconque des revendications 1 à 3, dans laquelle le moyen de détection inclut un moyen de calcul (45) afin de calculer la position de hauteur et la position latérale de l'élément à lancer (1) sur la base des états ON/OFF des capteurs optiques (21, 22) du capteur bidimensionnel (20), et le moyen d'évaluation (48) évalue le résultat basé sur le fait, si, oui ou non, la position de hauteur et la position latérale obtenues par le moyen de calcul se trouvent dans une plage de la cible affichée sur l'écran d'affichage (4a) pendant la spécification d'une plage de hauteur et d'une plage latérale.

5. Machine de jeu selon la revendication 4, dans laquelle une pluralité de zones cibles est ajustée, et le moyen d'évaluation (48) évalue le résultat sur la base du nombre de cibles dans lesquelles se trouvent des zones de la position de hauteur et de la position latérale.

6. Machine de jeu selon l'une quelconque des revendications 1 à 5, dans laquelle le moyen de détection inclut le capteur de détection optique (23) qui est prévu sur une position espacée à l'écart vers le joueur de jeu depuis le capteur bidimensionnel afin de détecter optiquement au moins un passage de l'élément à lancer.

7. Machine de jeu selon la revendication 1, comprenant en outre un second moyen de calcul (47) afin de calculer une vitesse de l'élément à lancer (1) sur la base d'un retard de temps entre un moment de commutation ON/OFF du capteur linéaire (23) et un moment de commutation ON/OFF du capteur bidimensionnel (20).

8. Machine de jeu selon l'une quelconque des revendications 1 à 7, dans laquelle le moyen d'affichage (4a) affiche l'état de déplacement calculé par le moyen de calcul (49) au moyen d'une caractéristique d'élément à lancer sur l'écran d'affichage (4a).

9. Machine de jeu selon l'une quelconque des revendications 2 à 8, comprenant en outre un élément formant une surface de jeu (3a) prévu devant l'écran d'affichage (4a) afin de placer l'élément à lancer (1) dessus, et une table inclinée (3) prévue entre l'écran d'affichage (4a) et l'élément formant une surface de jeu (3a) et abaissée vers l'élément formant une surface de jeu (3a).

10. Machine de jeu selon la revendication 9, comprenant en outre une corde (2) ayant une extrémité reliée à la table inclinée (3) et l'autre extrémité reliée à l'élément à lancer (1).

# FIG.1

FIG.2

# FIG.3

# FIG.4

CPU — 31

| COIN INSERT JUDGE MEANS | 40 |
| GAME TYPE DETERMINING MEANS | 41 |
| GAME CONT MEANS | 42 |
| DISPLAY CONT MEANS | 43 |
| SOUND O/P MEANS | 44 |
| BALL POSITION CALC MEANS | 45 |
| BALL PASSAGE TIMING MEASURE MEANS | 46 |
| BALL SPD CALC MEANS | 47 |
| HIT EVAL MEANS | 48 |
| FLY DISTANCE CALC MEANS | 49 |
| KICKING TIME EVAL MEANS | 50 |
| PRECISION EVAL MEANS | 51 |

# FIG.5

EP 1 184 059 B1

# FIG.6A

# FIG.6B

# FIG.7

```
        ┌─────────────┐
        │    START    │
        └──────┬──────┘
               │
        ┌──────▼──────────────┐
        │   STANDBY STATE     │────ST1
        └──────┬──────────────┘
               │
        ┌──────▼──────────────┐
        │   COIN  INSERTION   │────ST3
        └──────┬──────────────┘
               │
        ┌──────▼──────────────┐
        │   GAME  START       │────ST5
        └──────┬──────────────┘
               │
        ┌──────▼──────────────┐
        │   MODE  SELECTION   │────ST7
        └─────────────────────┘
```

ST8

| REAL-PLAY MODE | KICK-TARGET MODE | SET-PLAY MODE | ABILITY MEASURING MODE |

```
        ┌─────────────────┐
        │   GAME  OVER    │────ST9
        └──────┬──────────┘
               │
        ┌──────▼──────────┐
        │    RETURN       │
        └─────────────────┘
```

# FIG.8

REAL-PLAY MODE START

PREPARE INITIAL PATTERN — ST11

ST13 — TIME UP? — YES

NO

REPRODUCE DISPLAY PATTERN — ST17

ST19 — REPRODUCTION COMPLETED ? — YES

NO

FREEZE SCREEN AS IS — ST21

DISPLAY SELECTIONS — ST23

ST25 — TIME UP? — YES

NO

ST27 — ANY INPUT? — YES

NO

PREPARE NEXT PATTERN IN ACCOR WITH INPUT — ST29

TIME-UP PRESENTATION — ST15

GAME OVER

## FIG.9

IT'S KICK-OFF TIME!
LEAD YOUR TEAM TO VICTORY
WITH YOUR NICE PLAY TECHNIQUE!

FREE PLAY

## FIG.10

YOU'RE TARGETED BY ENEMY!
MAKE A DECISION NOW WHETHER
"GO STRAIGHT" OR "TURNING TO RIGHT
WHERE YOUR TEAM PLAYERS ARE"!

FREE PLAY

# FIG.11

```
        ┌──────────────────┐
        │   KICK-TARGET    │
        │   MODE START     │
        └────────┬─────────┘
                 │                                      ST49
                 ▼ ST31                          ┌──────────────────┐
   ┌──────────────────────────┐   ◄─────────────│ RAISE DEG. OF DIFF.│◄────┐
   │ DISPLAY EITHER 3,5,7,OR 9 │                 └──────────────────┘      │
   │  TARGETS DEPENDING        │                                          │
   │     ON DIFFICULTY         │                                          │
   └────────┬─────────────────┘                                          │
            │ ST33                                                        │
   ┌──────────────────┐                                                   │
   │ PRE-PRESENTATION │                                                   │
   └────────┬─────────┘                                                   │
            │◄──────────────────────────────────────────┐                │
            ▼ ST35                        NO             │                │
         ◇ BALL KICKED ? ◇────────────────────────────┘                │
            │ YES                                                         │
            ▼ ST37                   NO                                   │
         ◇ HIT TARGET ? ◇──────────────┐                                 │
            │ YES                       │ ST41                            │
            ▼ ST39                      ▼                                 │
   ┌──────────────────┐      ┌──────────────────┐                        │
   │   HIT TARGET     │      │    FAILURE       │                        │
   │  PRESENTATION    │      │  PRESENTATION    │                        │
   └────────┬─────────┘      └────────┬─────────┘                        │
            │◄──────────────────────────┘              NO    ST48         │
            ▼ ST43                                   ◇ FOURTH             │
         ◇ REMAINING          YES                      STAGE ? ◇ YES     │
         ◇ BALL EXISTS ? ◇────────────────────────────┘       │──────────┘
            │ NO                                        ▲
            ▼ ST45                                      │ ST47
         ◇ SPECIFIED          YES              ┌──────────────────┐
         ◇ # OF PANELS SHOT ─────────────────►│ DISPLAY RESULT   │
         ◇ THROUGH ? ◇                         └──────────────────┘
            │ NO ◄───────────────────────────────────────
            ▼
   ┌──────────────────┐
   │   GAME OVER      │
   └──────────────────┘
```

## FIG.12

P1    P2    P3    4a

FREE PLAY

## FIG.13

P1    P3    4a

FREE PLAY

## FIG.14

## FIG.15

## FIG.16

# FIG.17

# FIG.18

# FIG.19

# FIG.20

```
        ╭──────────────────╮
        │   SET PLAY MODE   │
        │      START        │
        ╰────────┬─────────╯
                 │              ST61
        ┌────────▼─────────┐            ST77
        │ PREPARE & DISPLAY │     ┌──────────────────┐
        │ SITUATIONS INCLUDING│◄──┤ RAISE DEG. OF DIFF.│◄───┐
        │ -PENALTY KICK     │     └──────────────────┘    │
        │ -FREE KICK        │                              │
        │ -CORNER KICK      │                              │
        └────────┬─────────┘                              │
                 │              ST63                        │
        ┌────────▼─────────┐                              │
        │ PRE-PRESENTATION │                              │
        └────────┬─────────┘                              │
                 │◄────────────────────┐                  │
              ST65                      │                  │
            ◇────────◇       NO        │                  │
           ◇ BALL KICKED? ◇───────────┘                  │
            ◇────────◇                                    │
               │ YES                                       │
            ST67                                           │
            ◇────────◇       NO                           │
           ◇ HIT TARGET? ◇──────────────┐                │
            ◇────────◇                   │                │
               │ YES    ST69          ST71                │
        ┌────────▼─────────┐    ┌──────────────┐         │
        │   TARGET HIT     │    │   FAILURE     │         │
        │  PRESENTATON     │    │ PRESENTATION  │         │
        └────────┬─────────┘    └──────┬───────┘         │
                 │ ST73                 │                  │
        ┌────────▼─────────┐           │                  │
        │  DISPLAY RESULT  │◄──────────┘                  │
        └────────┬─────────┘                              │
                 │         ST75                            │
            ◇─────────◇        YES                        │
           ◇ MOVEABLE TO ◇─────────────────────────────┘
           ◇ NEXT STAGE  ◇
            ◇     ?    ◇
               │ NO
        ╭──────▼───────────╮
        │    GAME OVER      │
        ╰──────────────────╯
```

# FIG.21

4a

FREE PLAY

## FIG.22

## FIG.23

# FIG.24

```
        ┌──────────────┐
        │    START     │
        └──────┬───────┘
               │
               ▼
    ┌──────────────────────┐
    │   SPD MEASUREMENT     │
    └──────────┬───────────┘
               │
               ▼
    ┌──────────────────────┐
    │ LONG-KICK  MEASUREMENT│
    └──────────┬───────────┘
               │
               ▼
    ┌──────────────────────┐
    │ QUICK-KICK MEASUREMENT│
    └──────────┬───────────┘
               │
               ▼
    ┌──────────────────────┐
    │ JUDGMENT  MEASUREMENT │
    └──────────┬───────────┘
               │
               ▼
    ┌──────────────────────┐
    │ DISPLAY FINAL RESULTS │
    └──────────┬───────────┘
               │
               ▼
        ┌──────────────┐
        │     END      │
        └──────────────┘
```

# FIG.25

```
                    ┌─────────────┐
                    │    START    │
                    └──────┬──────┘
                           │
                           ▼
              ┌─────────────────────────┐
              │      INITIALIZATION      │──── ST81
              └────────────┬────────────┘
                           │
                           ▼
              ┌─────────────────────────┐
              │    STAGE APPEARANCE      │──── ST83
              │      (EXPLANATION)       │
              └────────────┬────────────┘
                           │
                           ▼◄────────────────────┐
              ┌─────────────────────────┐        │
              │   DISPLAY "READY,GO"     │──── ST85│
              └────────────┬────────────┘        │
                           │                      │
                           ▼◄─────────┐           │
                    ST87              │           │
                      ╱╲              │           │
                    ╱    ╲            │           │
                  ╱  BALL  ╲    NO    │           │
                 ⟨ DETECTED ⟩─────────┘           │
                  ╲ BY 2D-  ╱                      │
                    ╲SENSOR╱                       │
                      ╲  ╱                         │
                       ╲╱                          │
                        │ YES                      │
                        ▼                          │
              ┌─────────────────────────┐          │
              │     CALC BALL SPD        │──── ST89 │
              └────────────┬────────────┘          │
                           │                       │
                           ▼                       │
              ┌─────────────────────────┐          │
              │     DISPLAY RESULT       │──── ST91 │
              └────────────┬────────────┘          │
                           │                       │
                        ST93                       │
                      ╱╲                           │
                    ╱    ╲        NO               │
                  ╱ REMAINING╲────────────────────┘
                 ⟨ BALL ≦ 0  ⟩
                  ╲    ?    ╱
                    ╲    ╱
                      ╲╱
                        │ YES
                        ▼
              ┌─────────────────────────┐
              │  DISPLAY FINAL RESULTS  │──── ST95
              └────────────┬────────────┘
                           │
                           ▼
                    ┌─────────────┐
                    │     END     │
                    └─────────────┘
```

## FIG.26

## FIG.27

# FIG.28

```
        ┌──────────┐
        │  START   │
        └──────────┘
              │
              ▼
    ┌──────────────────┐
    │  INITIALIZATION  │────  ST101
    └──────────────────┘
              │
              ▼
    ┌──────────────────┐
    │ STAGE APPEARANCE │────  ST103
    │  (EXPLANATION)   │
    └──────────────────┘
              │
              ▼
    ┌──────────────────┐
    │DISPLAY "READY,GO"│────  ST105
    └──────────────────┘
              │
              ▼           ST107
           ╱──────────────────╲
          ╱   BALL  DETECTED    ╲  NO
          ╲   BY 2D-SENSOR ?    ╱────►
           ╲──────────────────╱
              │ YES
              ▼
    ┌──────────────────┐
    │ CALC FLY DISTANCE│────  ST109
    └──────────────────┘
              │
              ▼
    ┌──────────────────┐
    │  DISPLAY RESULT  │────  ST115
    └──────────────────┘
              │          ST117
              ▼
           ╱──────────────────╲
          ╱  REMAINING BALL≦0   ╲  NO
          ╲         ?           ╱────►
           ╲──────────────────╱
              │ YES
              ▼
    ┌──────────────────┐
    │DISPLAY FINAL RESULTS│──  ST119
    └──────────────────┘
              │
              ▼
        ┌──────────┐
        │   END    │
        └──────────┘
```

## FIG.29

4a

KONAMI KONAMI KONAMI KONAMI KONAMI KONAMI KONAMI KONAMI KONAMI KON

# 2 6 . 1 m

FREE PLAY

# FIG.30

```
        ┌──────────────┐
        │    START     │
        └──────┬───────┘
               │
               ▼
     ┌──────────────────┐
     │  INITIALIZATION  │──── ST121
     └────────┬─────────┘
              │
              ▼
   ┌──────────────────────┐
   │  STAGE APPEARANCE    │──── ST123
   │   (EXPLANATION)      │
   └──────────┬───────────┘
              │
              ▼
   ┌──────────────────────┐
   │ DISPLAY "READY,GO"   │──── ST125
   └──────────┬───────────┘
              │                              ST129
              │              ┌──────────────────────────┐
              ▼              │  ADD TIME COUNTER VALUE  │
          ST127             └────────────▲─────────────┘
         ╱╲                               │
        ╱  ╲ BALL DETECTED      NO        │
       ╱    ╲ BY 2D-SENSOR ──────────────┘
       ╲    ╱      ?
        ╲  ╱
         ╲╱
          │ YES
          ▼
   ┌──────────────────┐
   │ CALC TIME FROM   │──── ST131
   │  COUNTER VALUE   │
   └────────┬─────────┘
            │
            ▼
   ┌──────────────────┐
   │  DISPLAY RESULT  │──── ST133
   └────────┬─────────┘
            │   ST135
            ▼
         ╱╲
        ╱  ╲              NO
       ╱ REMAINING BALL≦0 ────────────┐
       ╲       ?         ╱            │
        ╲               ╱             │
         ╲╱                           │
          │ YES                       │
          ▼                           │
   ┌────────────────────────┐         │
   │ DISPLAY FINAL RESULTS  │── ST137 │
   └──────────┬─────────────┘
              │
              ▼
        ┌──────────────┐
        │     END      │
        └──────────────┘
```

# FIG.31

# FIG.32

```
                    ┌──────────┐
                    │  START   │
                    └────┬─────┘
                         │
              ┌──────────▼──────────┐
              │   INITIALIZATION    │───── ST141
              └──────────┬──────────┘
                         │
              ┌──────────▼──────────┐
              │  STAGE APPEARANCE   │───── ST143
              │   (EXPLANATION)     │
              └──────────┬──────────┘
                         │
              ┌──────────▼──────────┐
              │ DISPLAY "READY,GO"  │───── ST145
              └──────────┬──────────┘
                         │
         ┌───────────────▼───────────────┐
         │  TWO AREAS APPEAR ON SCREEN    │───── ST147
         └───────────────┬───────────────┘
                         │
              ┌──────────▼──────────┐
              │   SUBTRACT TIME     │───── ST149
              └──────────┬──────────┘
                         │
                    ◇ ST151
              ╱─────────────────╲
             ╱  BALL  DETECTED    ╲   NO
             ╲  BY  2D-SENSOR ?   ╱─────
              ╲─────────────────╱
                    │ YES
                    │
                    ◇ ST153
        NO    ╱─────────────────╲
       ───────╲ BALL KICKED INTO ╱
             ╲ THE  RIGHT AREA  ╱
              ╲       ?        ╱
               ╲─────────────╱
                    │ YES
              ┌──────────▼──────────┐
              │   ADD 1 TO SCORE    │───── ST155
              └──────────┬──────────┘
                         │
                    ◇ ST157
              ╱─────────────────╲   NO
             ╱ REMAINING BALL≦0  ╲─────
             ╲        ?          ╱
              ╲─────────────────╱
                    │ YES
              ┌──────────▼──────────┐
              │ DISPLAY FINAL RESULTS│───── ST159
              └──────────┬──────────┘
                         │
                    ┌────▼─────┐
                    │   END    │
                    └──────────┘
```

# FIG.33

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6066736 A
- JP 10035280 A
- JP 10328690 A
- FR 2682608 A
- DE 29606848 U
- US 5035432 A